# EUROPEAN PATENT SPECIFICATION

(11) **EP 4 661 302 B1**
(45) Date of publication and mention of the grant of the patent: **09.12.2026**
(21) Application number: 24750223.0
(22) Date of filing: 29.01.2024
(51) Int. Cl.: G06K 19/07, H04B 5/26, H04B 5/43, H04B 5/48, H04B 5/79, H02J 50/12

(54) **CONTACTLESS COMMUNICATION DEVICE, CONTROL METHOD, AND PROGRAM**
KONTAKTLOSE KOMMUNIKATIONSVORRICHTUNG, STEUERUNGSVERFAHREN UND PROGRAMM
DISPOSITIF DE COMMUNICATION SANS CONTACT, PROCÉDÉ DE COMMANDE, ET PROGRAMME

(30) Priority: 01.02.2023 JP 2023014232
(43) Date of publication of application: 10.12.2025
(73) Proprietor: Nuvoton Technology Corporation Japan, Nagaokakyo City, Kyoto 617-8520 (JP)
(72) Inventor: MURAKUKI, Yasuo, Nagaokakyo City, Kyoto 617-8520 (JP); KII, Naoto, Nagaokakyo City, Kyoto 617-8520 (JP); SAKAI, Keita, Tokyo 151-0053 (JP); NAKASHIMA, Shota, Tokyo 151-0053 (JP); OKAWA, Yoshihito, Tokyo 151-0053 (JP)
(74) Representative: Appelt, Christian W.
(86) International application number: PCT/JP2024/002699
(87) International publication number: WO 2024/162274

(56) References cited:
- EP-A1- 1 022 677
- WO-A1-2019/198438
- JP-A- 2015 505 239
- JP-A- H06 178 464
- JP-A- H10 145 987
- US-A1- 2013 342 026

## Description

### [Technical Field]

The present invention relates to, for example, a contactless communication device that is a contactless IC responder referred to as, for example, a contactless IC card or IC tag that performs contactless data communication with an interrogator such as a reader-writer via electromagnetic waves.

### [Background Art]

In recent years, there has been an increase in usage of contactless IC responders such as contactless IC cards and IC tags that contactlessly transmit and receive data, and standardization of, for example, communication systems is in progress. For instance, there are standards such as ISO14443 for proximity-type contactless IC responders with a communication distance of around 10 cm and ISO15693 for vicinity-type contactless IC responders with a communication distance of around 70 cm.

Contactless IC cards of this type are increasingly employed for various purposes and are used as commuter passes, credit cards, or passports.

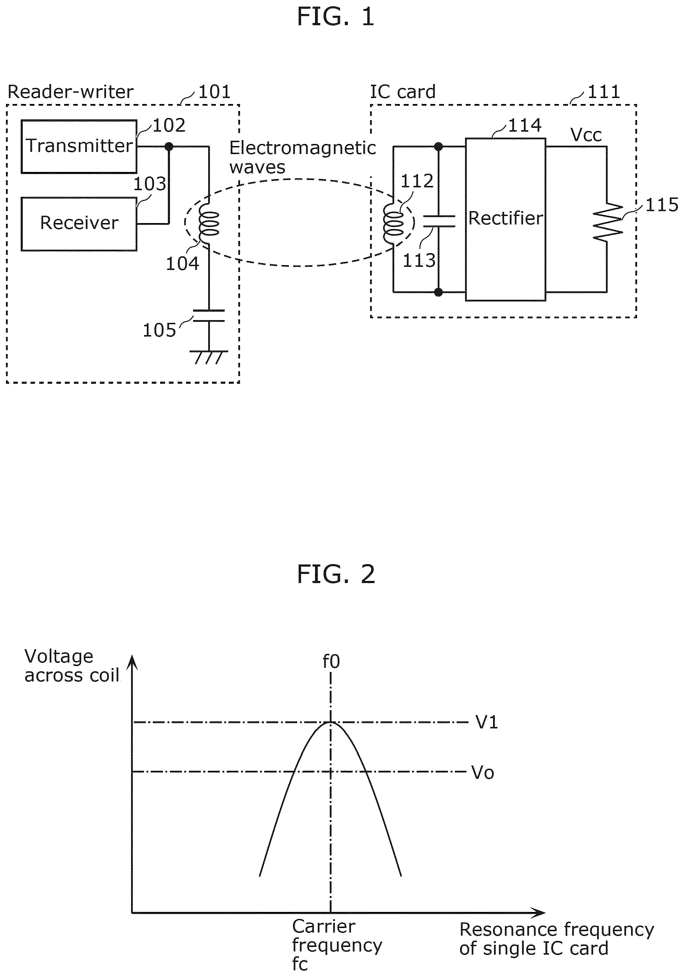

FIG. 1 illustrates a schematic configuration of an IC card system using a conventional IC card.

FIG. 1 illustrates a configuration of IC card 111 and reader-writer 101. For instance, reader-writer 101 includes transmitter 102, receiver 103, coil antenna 104, and resonance capacitor 105. For instance, IC card 111 includes coil antenna 112, resonance capacitor 113, rectifier 114, and load circuit 115. In the IC card system illustrated in FIG. 1, transmission and reception of power and a signal is performed between reader-writer 101 and IC card 111 by an electromagnetic induction method using electromagnetic waves. More specifically, reader-writer 101 transmits electromagnetic waves in which a data signal is superimposed onto carrier waves with a predetermined frequency. In this way, in IC card 111, a voltage is induced by electromagnetic induction at both ends of coil antenna 112 included in a resonance circuit. After the voltage is rectified by rectifier 114, the rectified voltage is used for operation of load circuit 115 as power supply voltage Vcc. Moreover, a data signal is extracted, and various processes are performed.

FIG. 2 illustrates a relationship between the resonance frequency of a single IC card and a voltage across the coil.

As illustrated in FIG. 2, when resonance frequency f0 of the resonance circuit is equal to carrier frequency fc of received electromagnetic waves, the voltage induced at both ends of coil antenna 112 becomes highest voltage V1. Resonance frequency f0 mentioned above is expressed as below.$f 0 = 1 / \left\{2\times π\times √\left(L\times C\right)\right\}$

Here, L denotes the inductance of coil antenna 112, and C denotes the capacitance of resonance capacitor 113.

Thus, in manufacturing IC card 111, the inductance of coil antenna 112 and the capacitance of resonance capacitor 113 are so set that resonance frequency f0 mentioned above is equal to carrier frequency fc.

In such an IC card system, data may be read out all at once from a plurality of IC cards. However, a resonance frequency drift occurs when for instance IC cards are placed on top of each other. Thus, in the conventional IC card system, it is difficult to read out data reliably.

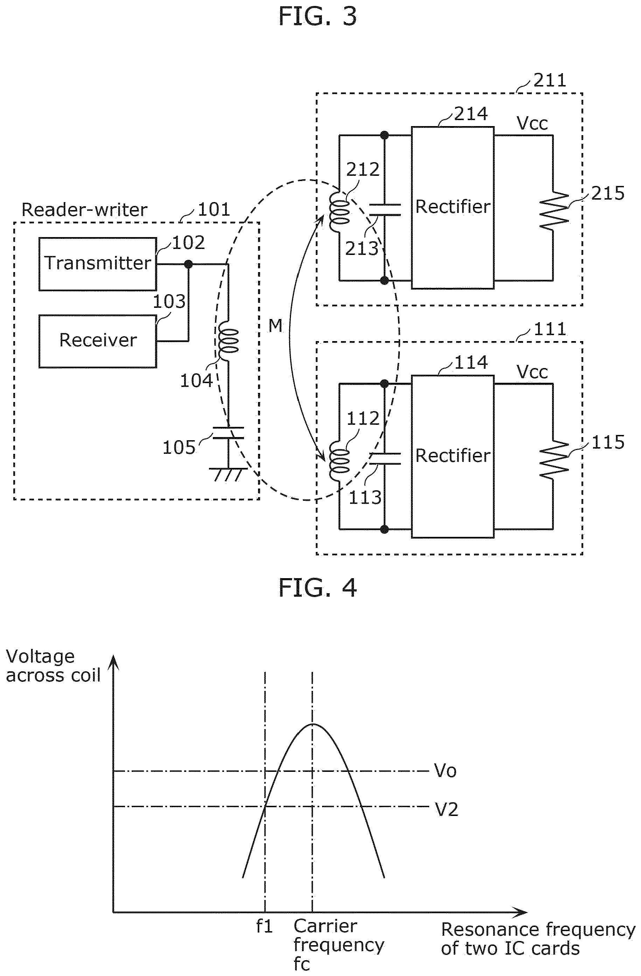

FIG. 3 illustrates a schematic configuration of a card system using conventional IC cards, when two IC cards are close to each other. As with IC card 111, IC card 211 includes coil antenna 212, resonance capacitor 213, rectifier 214, and load circuit 215.

As illustrated in FIG. 3, when coil antenna 112 and coil antenna 212 are close to each other, a resonance frequency decreases due to mutual inductance M that occurs because of a coupled relationship as illustrated in FIG. 3. Specifically, resonance frequency f1 of each of the resonance circuits of the two IC cards, IC cards 111 and 211 is as below.$f 1 = 1 / \left[2\times π\times √\left\{\left(L+M\right)\times C\right\}\right]$

Here, L denotes the inductance of coil antennas 112 and 212, and C denotes the capacitance of resonance capacitors 113 and 213, and M denotes mutual inductance.

FIG. 4 illustrates a relationship between the resonance frequency of two IC cards and a voltage across a coil.

The voltage induced in coil antennas 112 and 212 decreases to V2 illustrated in FIG. 4. The more the number of IC cards that are close to each other, and the closer the distance between IC cards, such a decrease in the induced voltage is more significant. When the induced voltage falls below minimum voltage Vo for IC cards 111 and 211 to operate, an issue occurs in which IC cards 111 and 211 are no longer able to communicate with reader-writer 101.

To avoid this issue, a method for correcting the resonance frequency by providing a plurality of resonance capacitive elements and performing selective switching between the resonance capacitive elements is suggested (see JP 2000-151480 A, JP 2007-228621 A, for example).

EP 1 022 677 A1 discloses that in a non-contact IC card, a driving portion sequentially switches a resonance frequency of a resonance circuit. A reference voltage generating portion receives an output voltage of resonance circuit for outputting a prescribed reference voltage. An output value measuring portion measures a magnitude of the output voltage of resonance circuit at each resonance frequency using the reference voltage as a reference. An output value storing portion stores a measurement value. A manner determining portion selects the largest one of the output values stored in output value storing portion, and determines a switching manner corresponding thereto as a suitable switching manner.

US 2013/342026 A1 discloses a power-receiving device in a non-contact power transmission system includes a power-receiving antenna circuit for receiving power transmitted from a power-transmitting device, a rectification circuit for rectifying power received by the power-receiving antenna circuit, a frequency-changing circuit for changing a received power frequency of the power-receiving antenna circuit, and a drive circuit for driving the frequency-changing circuit.

### [Summary of Invention]

### [Technical Problem]

However, in the resonance frequency correction methods disclosed in JP 2000-151480 A and JP 2007-228621 A, when detecting that an induced voltage exceeds minimum voltage Vo for an IC card to operate, the resonance frequency is corrected. As an issue, the induced voltage across a coil antenna is decreased due to a change in the resonance frequency, which leads to a decrease in power supply voltage Vcc. As another issue, when a load current is changed due to transmission or reception operation of the IC card, power supply voltage Vcc decreases. That is, when the induced voltage is decreased due to a change in the resonance frequency or when a load current is increased due to, for example, the transmission or reception operation of the IC card, maintaining minimum voltage Vo for the IC card to operate is not guaranteed, which destabilizes the operation of IC card.

In view of this, the present invention provides, for example, a contactless communication device capable of maintaining a minimum voltage for an IC card to operate when a resonance frequency is corrected and achieving stable operation of the IC card, in both cases of a single IC card and a plurality of IC cards that are on top of each other.

### [Solution to Problem]

A contactless communication device according to the present claim includes: an antenna that receives power from a transceiver device through contactless communication; a resonance frequency variable circuit that changes a resonance frequency of the antenna; a rectifier that rectifies an antenna output current output by the antenna; a load circuit that consumes a load current; a detector that detects an excess current that is a difference between a rectified output current output by the rectifier and the load current; and a resonance frequency controller that changes the resonance frequency of the antenna by controlling the resonance frequency variable circuit according to a detection signal output by the detector and indicating a detection result of the excess current.

A control method according to the present claim is a control method for controlling a contactless communication device, the contactless communication device including: an antenna that receives power from a transceiver device through contactless communication; a resonance frequency variable circuit that changes a resonance frequency of the antenna; a rectifier that rectifies an antenna output current output by the antenna; a load circuit that consumes a load current; and a detector that detects an excess current that is a difference between a rectified output current output by the rectifier and the load current. The control method includes: obtaining a detection signal output by the detector and indicating a detection result of the excess current; and changing the resonance frequency of the antenna by controlling the resonance frequency variable circuit according to the detection signal.

A program according to the present claim 11 is a program for causing a computer to execute the above control method.

It should be noted that these general or specific aspects may be achieved as a system, a method, an integrated circuit, a computer program, or a computer-readable recording medium such as a CD-ROM. These general or specific aspects may be achieved by any combination of the system, method, integrated circuit, computer program, and recording medium.

### [Advantageous Effects of Invention]

A contactless communication device according to one aspect of the present invention can maintain a minimum voltage for an IC card to operate when a resonance frequency is corrected and achieve stable operation of the IC card, in both cases of a single IC card and a plurality of IC cards that are on top of each other.

### [Brief Description of Drawings]

[FIG. 1]
   FIG. 1 illustrates a schematic configuration of an IC card system using a conventional IC card.
[FIG. 2]
   FIG. 2 illustrates a relationship between the resonance frequency of a single IC card and a voltage across a coil.
[FIG. 3]
   FIG. 3 illustrates a schematic configuration of a card system using conventional IC cards, when two IC cards are close to each other.
[FIG. 4]
   FIG. 4 illustrates a relationship between the resonance frequency of two IC cards and a voltage across a coil.
[FIG. 5]

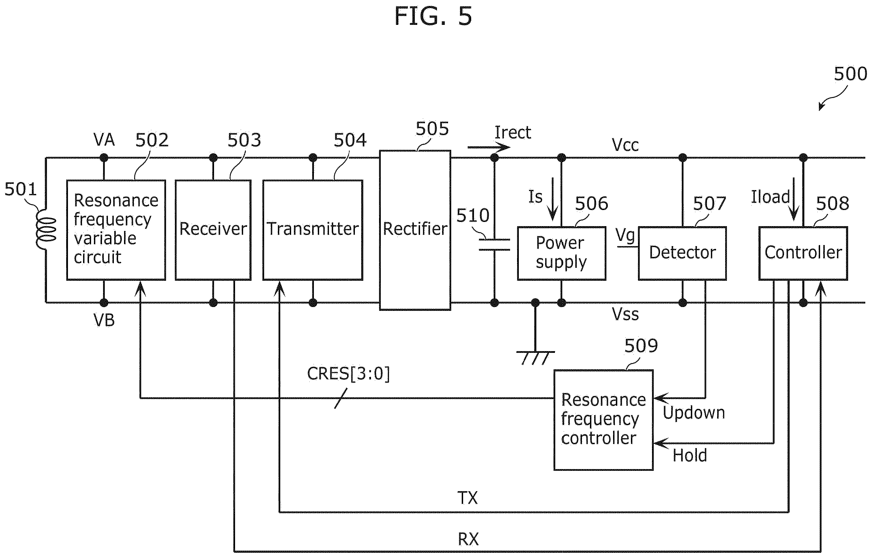

   FIG. 5 illustrates a configuration of a contactless IC card according to Embodiment 1.
[FIG. 6]

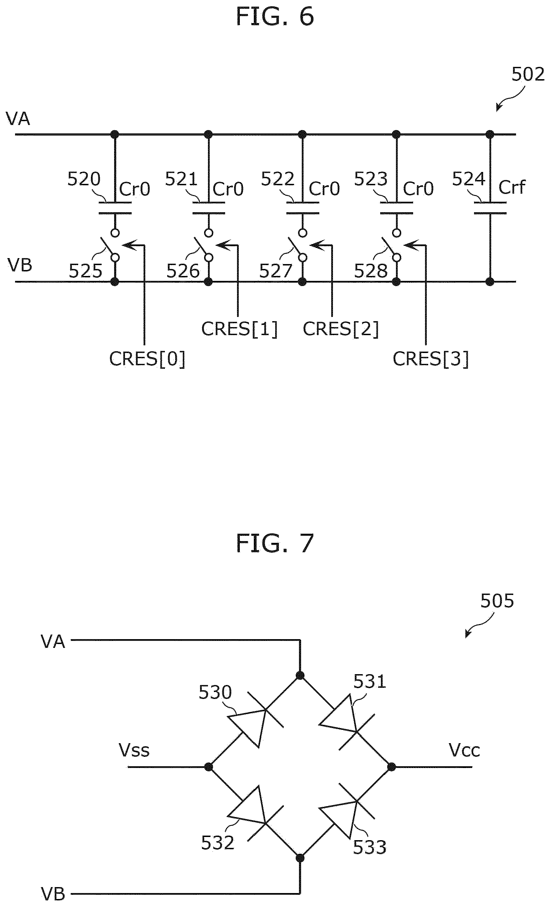

   FIG. 6 illustrates a configuration of a resonance frequency variable circuit in Embodiment 1.
[FIG. 7]
   FIG. 7 illustrates a configuration of a rectifier in Embodiment 1.
[FIG. 8]

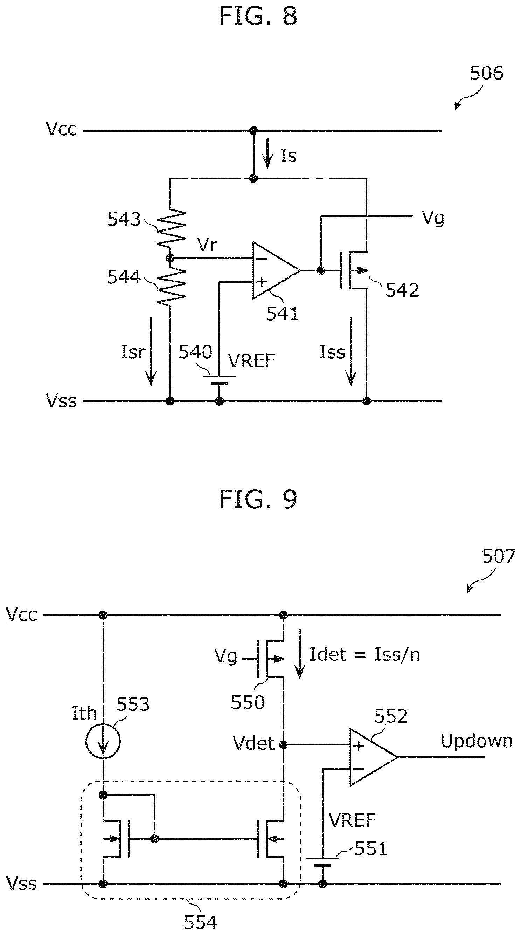

   FIG. 8 illustrates a configuration of a power supply in Embodiment 1.
[FIG. 9]
   FIG. 9 illustrates a configuration of a detector in Embodiment 1.
[FIG. 10]

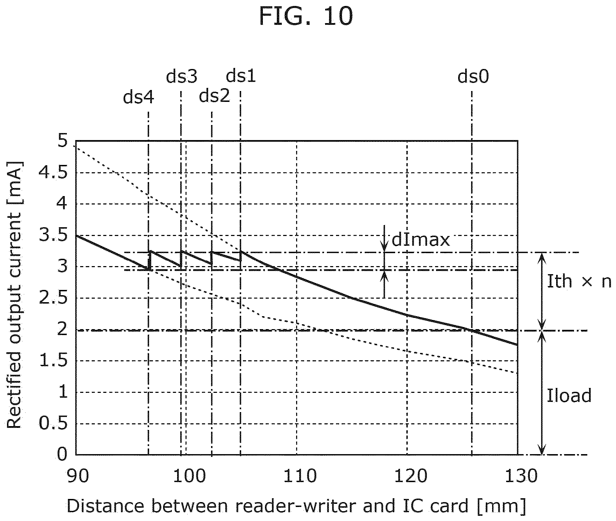

   FIG. 10 illustrates a relationship between a rectified output current and the distance between a single IC card according to Embodiment 1 and a reader-writer.
[FIG. 11A]

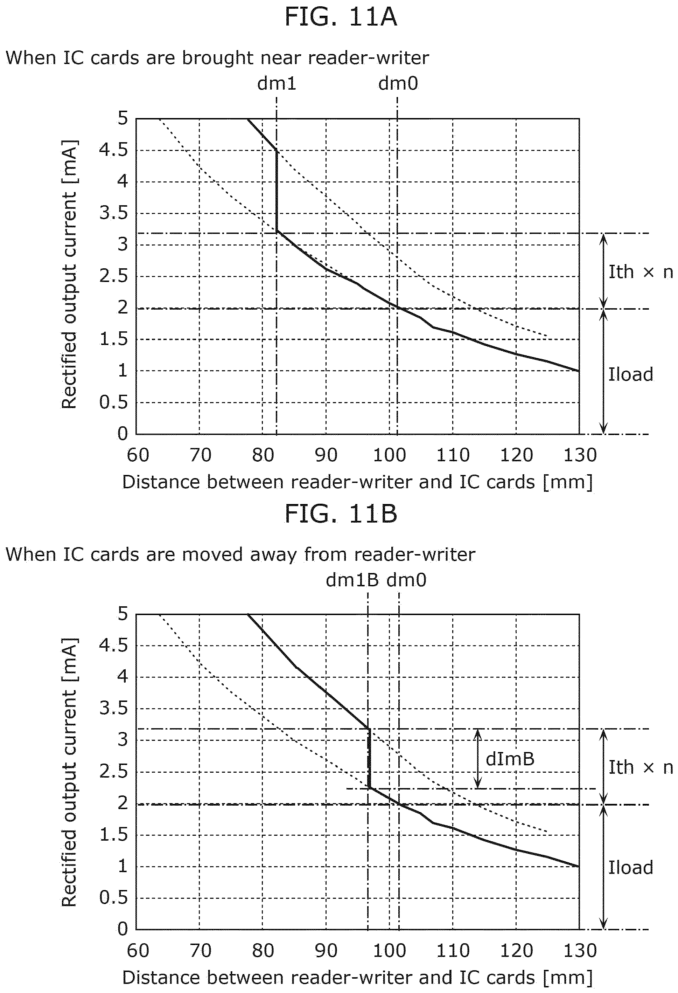

   FIG. 11A illustrates a relationship between a rectified output current and the distance between two IC cards according to Embodiment 1 and the reader-writer.
[FIG. 11B]
   FIG. 11B illustrates a relationship between a rectified output current and the distance between the two IC cards according to Embodiment 1 and the reader-writer.
[FIG. 12]

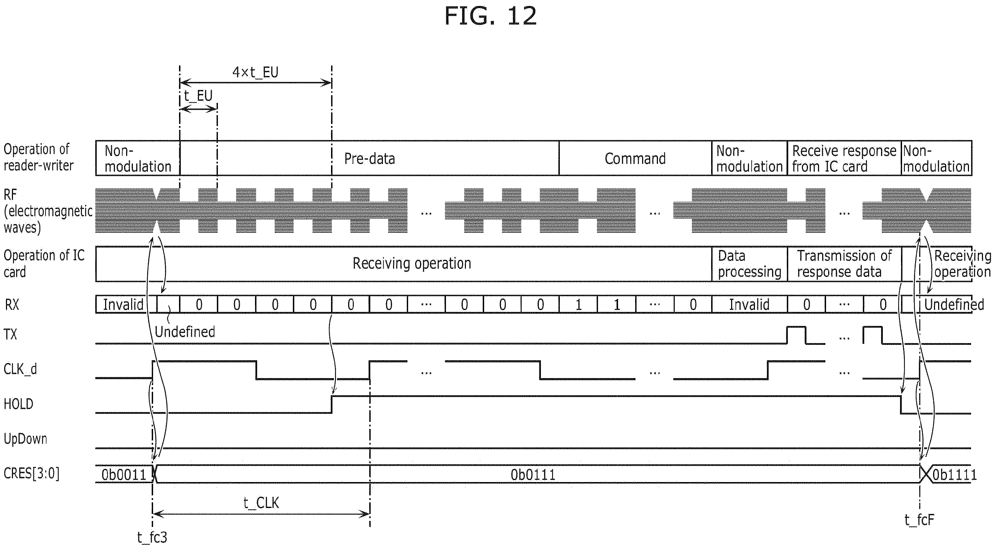

   FIG. 12 is a time chart of a control signal controlled by a resonance frequency controller according to Embodiment 1.
[FIG. 13]

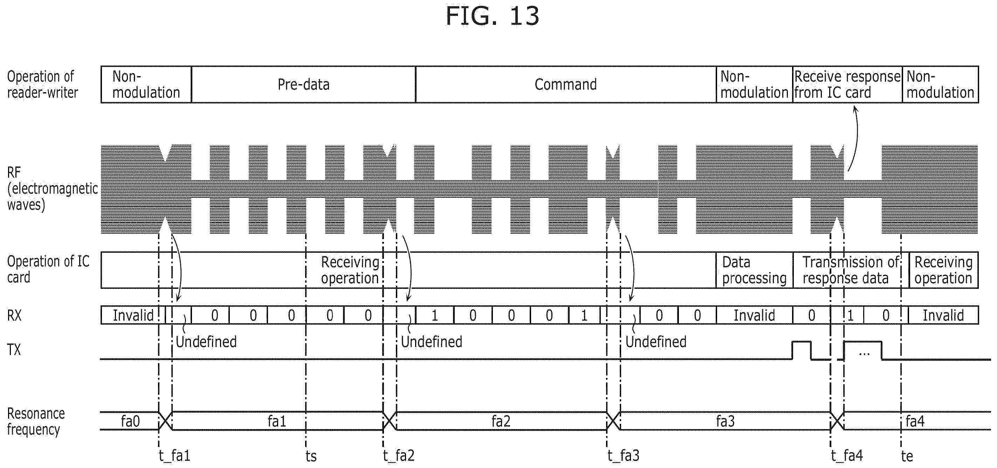

   FIG. 13 is a time chart of an IC card system having the function of changing the resonance frequency.
[FIG. 14]

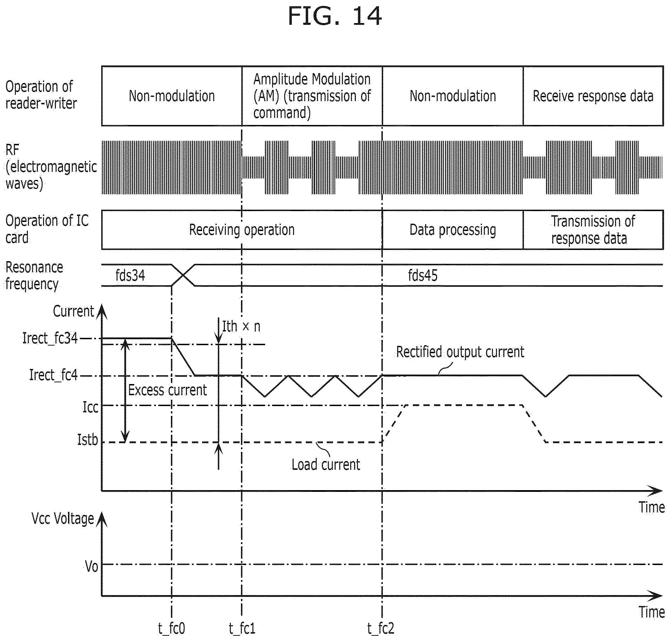

   FIG. 14 is a time chart illustrating a transition of each of a rectified output current, a load current, and a power supply voltage when communication is being performed between the single IC card according to Embodiment 1 and the reader-writer.
[FIG. 15]

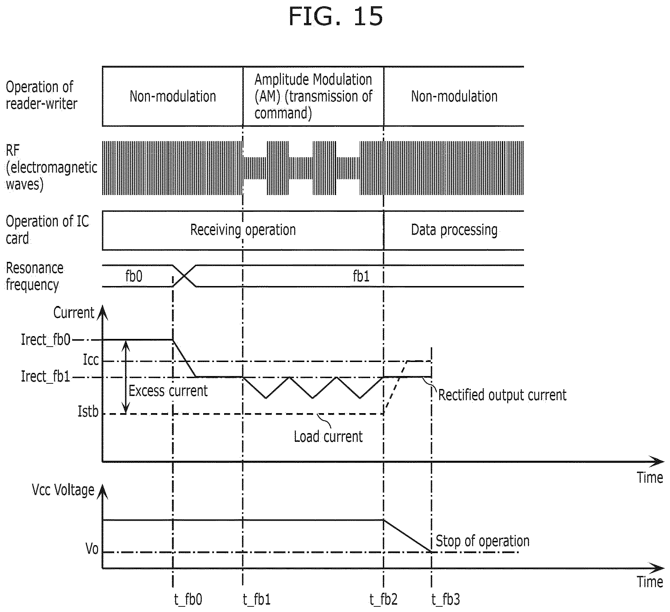

   FIG. 15 is a time chart illustrating a transition of each of the rectified output current, load current, and power supply voltage of the IC card system having the function of changing the resonance frequency.
[FIG. 16]

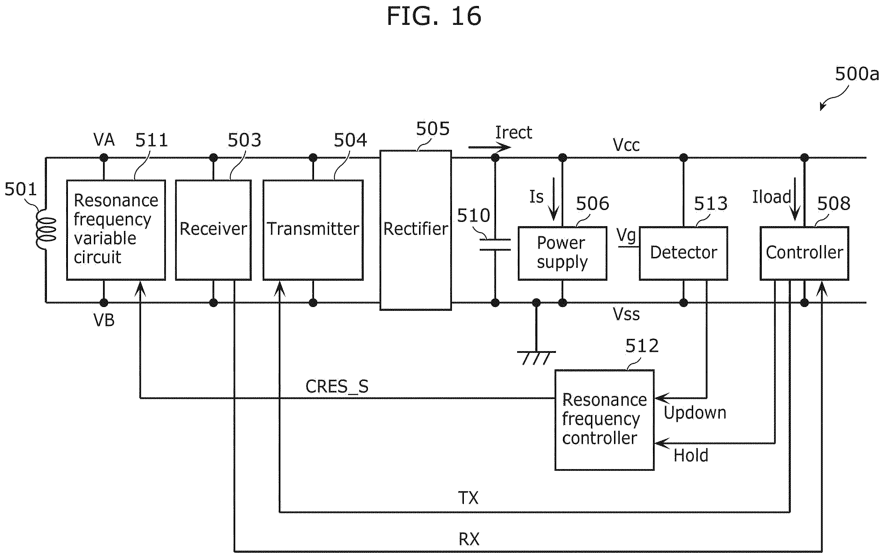

   FIG. 16 illustrates a configuration of a contactless IC card according to Embodiment 2.
[FIG. 17]

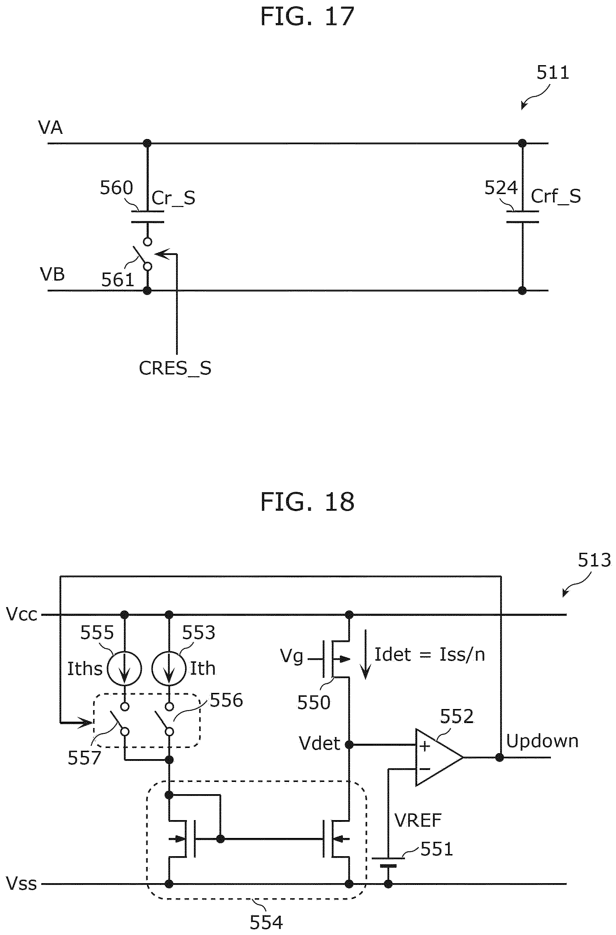

   FIG. 17 illustrates a configuration of a resonance frequency variable circuit in Embodiment 2.
[FIG. 18]
   FIG. 18 illustrates a configuration of a detector in Embodiment 2.
[FIG. 19A]

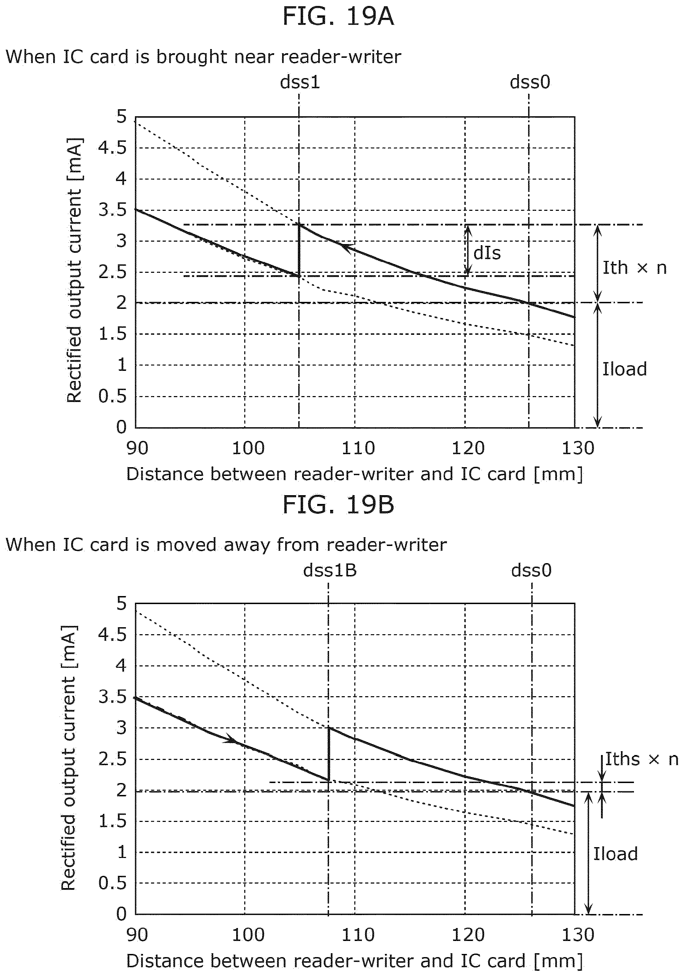

   FIG. 19A illustrates a relationship between a rectified output current and the distance between a single IC card according to Embodiment 2 and a reader-writer.
[FIG. 19B]
   FIG. 19B illustrates a relationship between a rectified output current and the distance between the single IC card according to Embodiment 2 and the reader-writer.
[FIG. 20A]

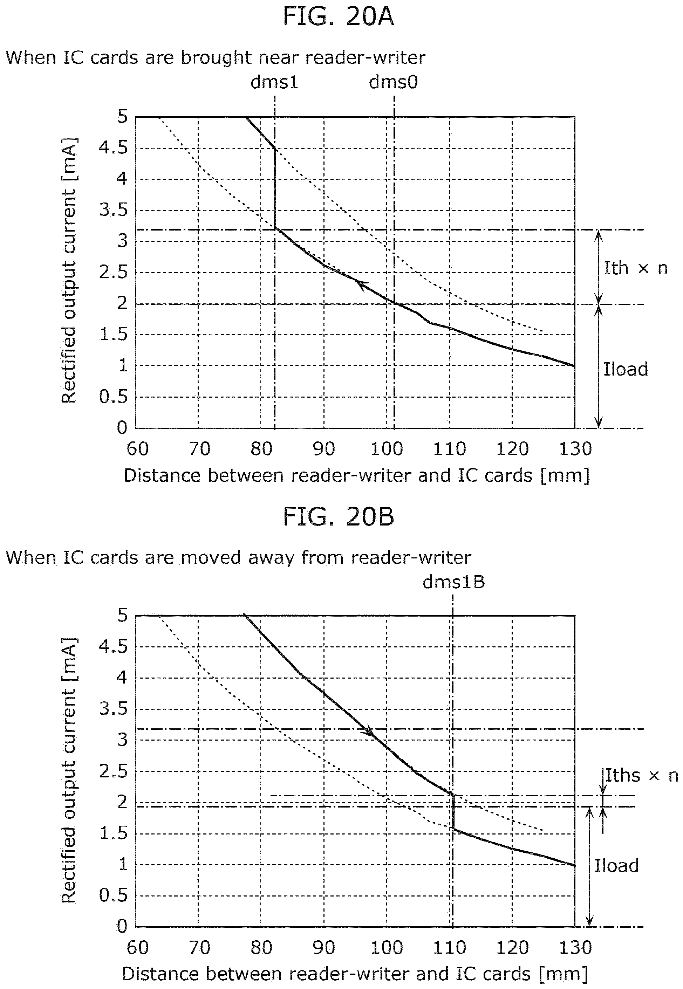

   FIG. 20A illustrates a relationship between a rectified output current and a distance between two IC cards according to Embodiment 2 and the reader-writer.
[FIG. 20B]
   FIG. 20B illustrates a relationship between a rectified output current and the distance between the two IC cards according to Embodiment 2 and the reader-writer.
[FIG. 21]

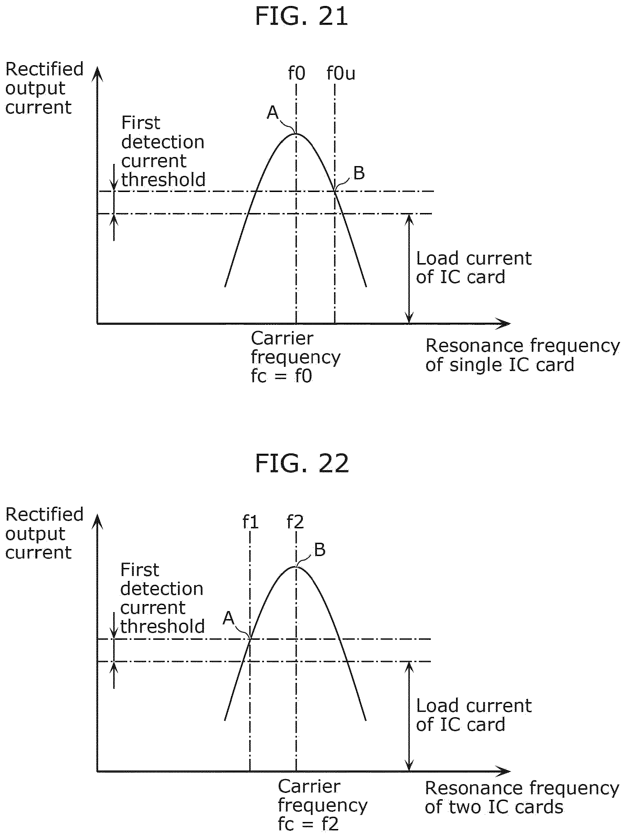

   FIG. 21 illustrates a relationship between a resonance frequency and a rectified output current when communication is performed between the single IC card and the reader-writer.
[FIG. 22]
   FIG. 22 illustrates a relationship between a resonance frequency and a rectified output current when communication is performed between the two IC cards and the reader-writer.
[FIG. 23]

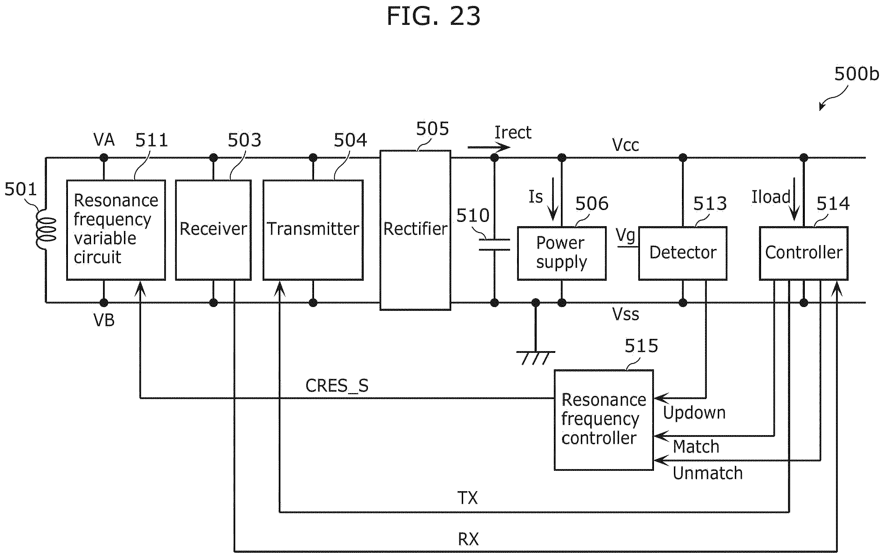

   FIG. 23 illustrates a configuration of a contactless IC card according to Embodiment 3.
[FIG. 24A]

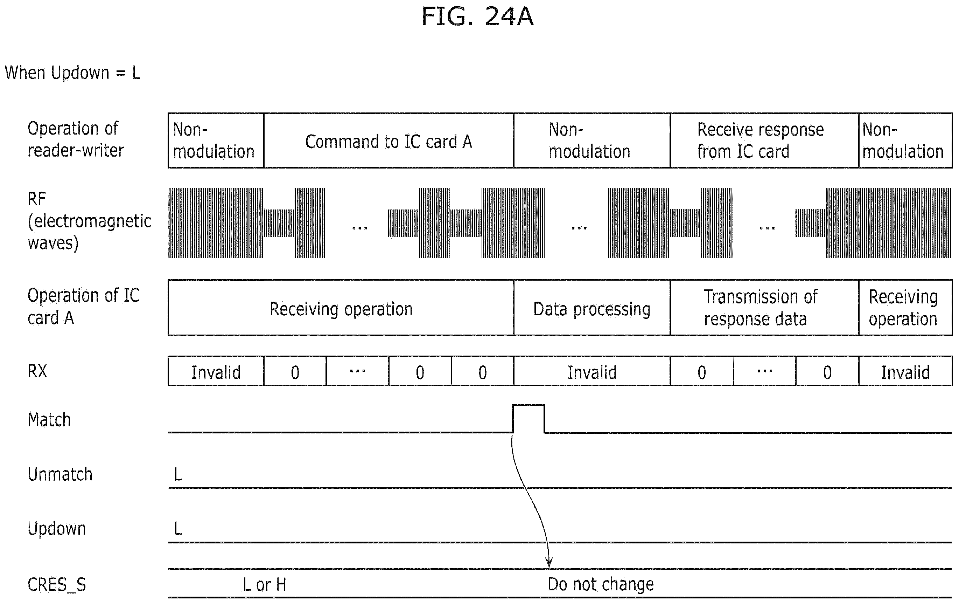

   FIG. 24A is a time chart when a reader-writer transmits, to an IC card according to Embodiment 3, a command to the IC card.
[FIG. 24B]

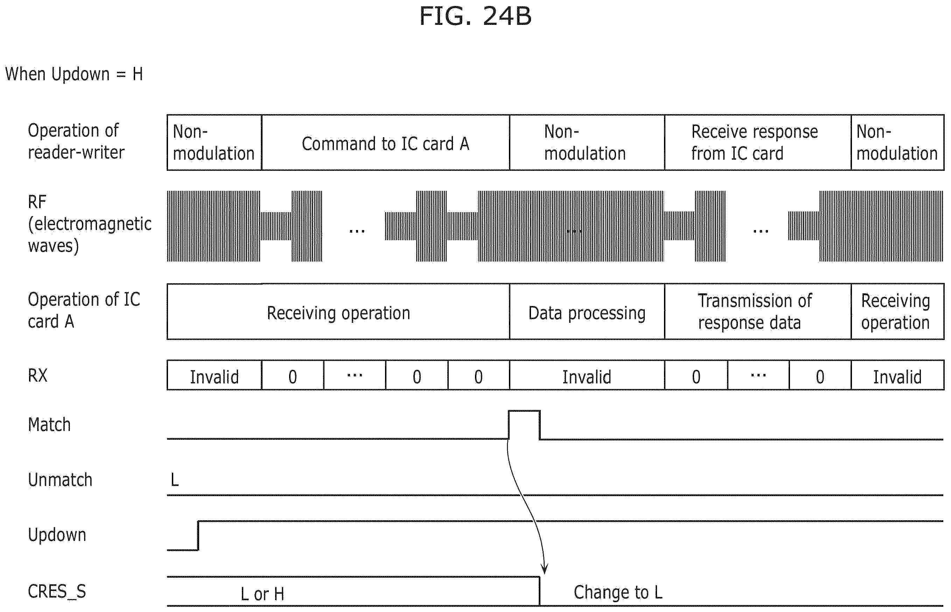

   FIG. 24B is a time chart when the reader-writer transmits, to the IC card according to Embodiment 3, a command to the IC card.
[FIG. 25]

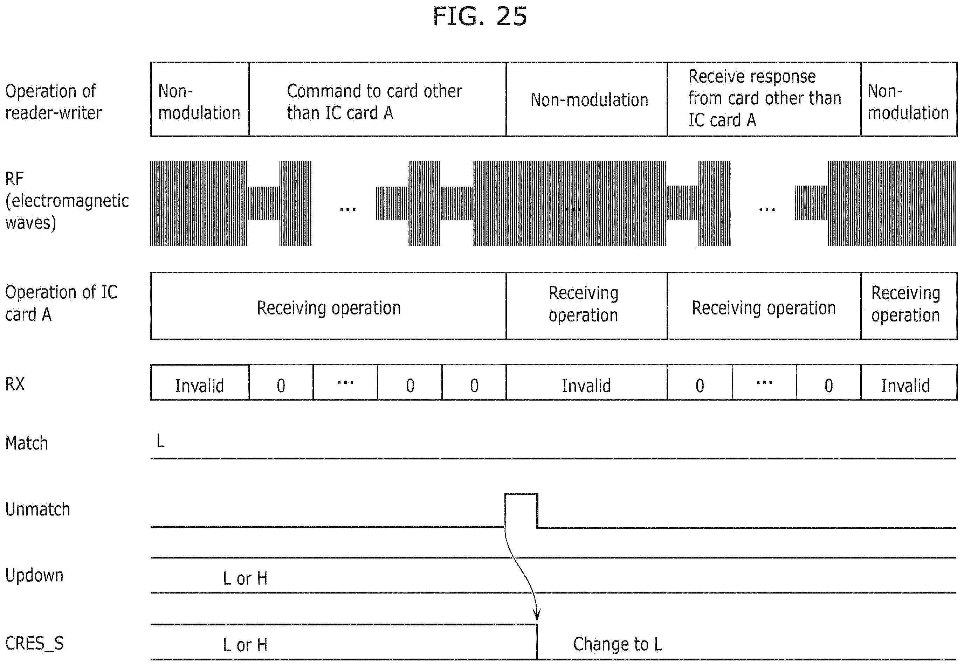

   FIG. 25 is a time chart when the reader-writer transmits, to the IC card according to Embodiment 3, a command to an IC card other than the IC card according to Embodiment 3.
[FIG. 26]

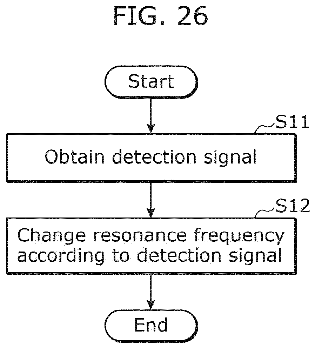

   FIG. 26 is a flowchart illustrating an example of a control method according to another embodiment.

### [Description of Embodiments]

Hereinafter, embodiments are described in detail with reference to the drawings.

It should be noted that the embodiments described below each indicate a general or specific example. The numerical values, shapes, materials, constituent elements, arrangement and connection of the constituent elements, steps, order of steps, and other details indicated in the embodiments described below are merely examples, and do not intend to limit the present invention.

### [Embodiment 1]

Hereinafter, a contactless communication device according to Embodiment 1 is described.

FIG. 5 illustrates a schematic configuration of contactless IC card 500 according to Embodiment 1.

IC card 500 is an example of a contactless communication device. IC card 500 includes coil antenna 501, resonance frequency variable circuit 502, receiver 503, transmitter 504, rectifier 505, power supply 506, detector 507, controller 508, resonance frequency controller 509, and smoothing capacitor 510.

Coil antenna 501 is an example of an antenna that receives power from a transceiver device through contactless communication. For instance, the transceiver device is a reader-writer.

Resonance frequency variable circuit 502 is a circuit for changing the resonance frequency of coil antenna 501. FIG. 6 illustrates a configuration of resonance frequency variable circuit 502.

FIG. 6 illustrates a configuration of resonance frequency variable circuit 502 in Embodiment 1.

One end of capacitive element 524 is connected to terminal VA, and the other end of capacitive element 524 is connected to terminal VB. One end of each of capacitive elements 520 to 523 is connected to terminal VA, and the other end of each of capacitive elements 520 to 523 is connected to terminal VB via a corresponding one of switching elements 525 to 528. Switching elements 525 to 528 become conductive when the logic level of control signal CRES[3:0] changes to an H level, and switching elements 525 to 528 are brought to an off-state when the logic level of control signal CRES[3:0] changes to an L level. Inductance L of coil antenna 501 and at least capacitive element 524 among capacitive elements 520 to 524 included in resonance frequency variable circuit 502 constitute an LC resonance circuit.

Rectifier 505 rectifies an antenna output current output by coil antenna 501. Specifically, rectifier 505 rectifies an alternating voltage generated between terminal VA and terminal VB at both ends of coil antenna 501, outputs current Irect, charges smoothing capacitor 510, and generates power supply voltage Vcc. FIG. 7 illustrates a configuration of rectifier 505.

FIG. 7 illustrates a configuration of rectifier 505 in Embodiment 1.

For instance, rectifier 505 includes diode elements 530 to 533 connected in a bridge configuration, and performs full-wave rectification.

Power supply 506 generates, from a rectified output current (current Irect) output by rectifier 505, predetermined power supply voltage Vcc to be applied to controller 508. Specifically, power supply 506 includes a shunt power supply circuit that supplies shunt current Is to ground reference electric potential Vss according to the input voltage of power supply 506 and predetermined power supply voltage Vcc. In power supply 506, when power supply voltage Vcc exceeds a predetermined voltage, the shunt power supply circuit supplies shunt current Is to ground reference electric potential Vss, and performs control to avoid power supply voltage Vcc exceeding a predetermined value. FIG. 8 illustrates a configuration of power supply 506.

FIG. 8 illustrates a configuration of power supply 506 in Embodiment 1.

Constant voltage source 540 outputs predetermined reference voltage VREF, which is input into the positive input terminal of comparator 541. Voltage Vr is output according to the sizes of resistance elements 543 and 544, and voltage Vr is input into the negative input terminal of comparator 541. Comparator 541 outputs the result of comparison between voltage Vr and reference voltage VREF to the gate of p-type MOSFET 542. Control to avoid power supply voltage Vcc reaching or exceeding the predetermined voltage is performed in the following manner: when voltage Vr exceeds reference voltage VREF, an operation to decrease gate voltage Vg of p-type MOSFET 542 and increase shunt current Iss is performed, and when voltage Vr falls below reference voltage VREF, an operation to increase gate voltage Vg and decrease shunt current Iss is performed. It should be noted that since the resistance values of resistance elements 543 and 544 are large and a current flowing through resistance elements 543 and 544 is very small, the magnitude of shunt current Iss is approximately equal to that of shunt current Is.

Controller 508 is an example of a load circuit that is connected to power supply 506 and consumes load current Iload.

Detector 507 detects an excess current that is a difference between current Irect and load current Iload (specifically, a value obtained by subtracting load current Iload from current Irect). FIG. 9 illustrates a configuration of detector 507.

FIG. 9 illustrates a configuration of detector 507 in Embodiment 1.

Detector 507 includes p-type MOSFET 550 and comparator 552. P-type MOSFET 550 is a current detection circuit that outputs a detection current (current Idet = Iss/n) having a current value correlated with the current value of shunt current Iss. Comparator 552 compares the current value of the detection current and a first detection current threshold, and outputs a comparison result as a detection signal (UpDown signal). P-type MOSFET 550 is configured to have a gate width size that is 1/n the gate width size of p-type MOSFET 542 illustrated in FIG. 8. Thus, current Idet flowing through p-type MOSFET 550 is 1/n shunt current Iss. Current mirror 554 passes the same current as current Ith of constant current source 553 through a connection node connected to the positive input terminal of comparator. The voltage of the connection node is voltage Vdet. When current Idet is larger than current Ith, voltage Vdet is increased to decrease current Idet toward current Ith (that is, an electric potential difference between power supply voltage Vcc and voltage Vdet becomes smaller). When current Idet is smaller than current Ith, voltage Vdet is decreased to increase current Idet toward current Ith (that is, an electric potential difference between power supply voltage Vcc and voltage Vdet becomes larger). Comparator 552 outputs, as an UpDown signal, the result of comparison between voltage VREF output by constant voltage source 551 and voltage Vdet. When voltage Vdet is larger than voltage VREF, comparator 552 outputs an UpDown signal whose logic level is an H level. When voltage Vdet is smaller than voltage VREF, comparator 552 outputs an UpDown signal whose logic level is an L level. In such a configuration of detector 507, it is possible to detect whether current Idet = Iss/n is larger than current Ith or less than or equal to current Ith. With a design where the values of current Isr and current Idet flowing through resistance elements 543 and 544 are sufficiently smaller than the value of load current Iload consumed by controller 508, shunt current Iss is expressed as below.$Iss ≒ Irect - Iload$

Shunt current Iss is an excess current that is a difference between current Irect supplied by rectifier 505 and load current Iload consumed by controller 508.

Receiver 503 detects a voltage amplitude generated between terminal VA and terminal VB, and outputs demodulated signal RX. Transmitter 504 changes the impedance between terminal VA and terminal VB according to transmission data TX, and transmits the transmission data to the reader-writer. Controller 508 performs predetermined processing according to demodulated signal RX, and outputs predetermined response data as transmission data TX. Moreover, controller 508 detects that demodulated signal RX is of a predetermined pattern, and outputs a HOLD signal for controlling the execution and stop of an operation of resonance frequency controller 509 (specifically, the operation of changing the resonance frequency of coil antenna 501).

Resonance frequency controller 509 controls resonance frequency variable circuit 502 according to the detection signal (UpDown signal) output from detector 507 and indicating the detection result of an excess current, thereby changing the resonance frequency of coil antenna 501. Specifically, resonance frequency controller 509 performs control of control signal CRES[3:0] according to the UpDown signal and performs hold control of control signal CRES[3:0] according to the HOLD signal.

FIG. 10 illustrates a relationship between a rectified output current (current Irect) and distance d between single IC card 500 according to Embodiment 1 and the reader-writer.

Load current Iload is current consumption of IC card 500, and when the rectified output current exceeds load current Iload, IC card 500 starts operating (distance ds0). Control signal CRES[3:0] when IC card 500 starts operating is set to 0b1111, and capacitance Cr0 of capacitive elements 520 to 523 and capacitance Crf of capacitive element 524 are so set as to satisfy the following expression to cause the resonance frequency of coil antenna 501 at the operation start time of IC card 500 to approximately match carrier frequency fc.$fc ≒ fds 01 = 1 / \left\{2\times π\times √\left(L\times \left(Cr0\times 4+Crf\right)\right)\right\}$

When distance d becomes less than distance ds0, current Irect increases. When distance d changes to distance ds1 and current Irect exceeds threshold Ith × n (the first detection current threshold), the UpDown signal changes to the H level, control signal CRES[3:0] transitions to 0b0111, and the resonance frequency increases to fds12 indicated below. $fds 12 = 1 / \left\{2\times π\times √\left(L\times \left(Cr0\times 3+Crf\right)\right)\right\}$

Likewise, the resonance frequency is as below, depending on distance d.$ds 0 > = d > = ds 1 : fds 01 = 1 / \left\{2\times π\times √\left(L\times \left(Cr0\times 4+Crf\right)\right)\right\}$ $ds 1 > = d > = ds 2 : fds 12 = 1 / \left\{2\times π\times √\left(L\times \left(Cr0\times 3+Crf\right)\right)\right\}$ $ds 2 > = d > = ds 3 : fds 23 = 1 / \left\{2\times π\times √\left(L\times \left(Cr0\times 2+Crf\right)\right)\right\}$ $ds 3 > = d > = ds 4 : fds 34 = 1 / \left\{2\times π\times √\left(L\times \left(Cr0\times 1+Crf\right)\right)\right\}$ $ds 4 > = d : fds 45 = 1 / \left\{2\times π\times √\left(L\times \left(Cr0\times 0+Crf\right)\right)\right\}$

In the section from distance ds1 to distance ds4, current Irect changes according to the change in the resonance frequency. Threshold Ith × n is set to a value greater than dImax that is the maximum value of the change amount of current Irect illustrated in FIG. 10. By doing so, even if the resonance frequency undergoes a transition, it is possible to satisfy Irect > Iload, which can avoid the power supply voltage of IC card 500 becoming unstable.

FIGS. 11A and 11B each illustrate a relationship between a rectified output current (current Irect) and distance d between two IC cards 500 according to Embodiment 1 and the reader-writer. FIG. 11A illustrates the relationship when two IC cards 500 are brought near the reader-writer, whereas FIG. 11B illustrates the relationship when two IC cards 500 are moved away from the reader-writer. First, a case where two IC cards 500 are brought near the reader-writer is described.

As illustrated in FIG. 11A, when the rectified output current exceeds load current Iload, IC cards 500 start operating (distance dm0). Control signal CRES[3:0] when IC cards 500 start operating is set to 0b1111. When distance d becomes less than distance dm0, current Irect increases. When distance d changes to distance dm1 and current Irect exceeds threshold Ith × n (the first detection current threshold), the UpDown signal changes to the H level, control signal CRES[3:0] transitions to 0b0111, and the resonance frequency of coil antennas 501 increases to fdm12 indicated below.$fdm 12 = 1 / \left\{2\times π\times √\left(\left(L+M\right)\left(Cr0\times 3+Crf\right)\right)\right\}$

Since resonance frequency fdm01 when distance d is between distance dm0 and distance dm1 is smaller than carrier frequency fc, the value of current Irect at resonance frequency fdm12 is greater than that of current Irect at resonance frequency fdm01. The reason is as follows: as described above, the resonance frequency of coil antenna 501 when IC card 500 starts operating is set to approximately match carrier frequency fc, and when IC cards 500 are on top of each other, the resonance frequency becomes lower. Thus, even after the resonance frequency transitions to fdm12, current Irect is larger than threshold Ith × n. As such, the resonance frequency sequentially transitions from fdm12 to fdm23 to fdm34 to fdm45 almost instantaneously. Likewise, the resonance frequency is as below, depending on distance d.$dm 0 > = d > = dm 1 : fdm 01 = 1 / \left\{2\times π\times √\left(\left(L+M\right)\times \left(Cr0\times 4+Crf\right)\right)\right\}$ $d = dm 1 : fdm 12 = 1 / \left\{2\times π\times √\left(\left(L+M\right)\times \left(Cr0\times 3+Crf\right)\right)\right\}$ $d = dm 1 : fdm 23 = 1 / \left\{2\times π\times √\left(\left(L+M\right)\times \left(Cr0\times 2+Crf\right)\right)\right\}$ $d = dm 1 : fdm 34 = 1 / \left\{2\times π\times √\left(\left(L+M\right)\times \left(Cr0\times 1+Crf\right)\right)\right\}$ $dm 1 > d : fdm 45 = 1 / \left\{2\times π\times √\left(\left(L+M\right)\times \left(Cr0\times 0+Crf\right)\right)\right\}$

By setting capacitance Crf such that resonance frequency fdm45 of two IC cards 500 approximately matches carrier frequency fc, under the condition that distance d is less than distance dm1, IC cards 500 can be operated in a state where the resonance frequency matches carrier frequency fc.

At distance dm1, current Irect increases as illustrated in FIG. 11A according to the change in the resonance frequency, which can satisfy Irect > Iload. Thus, the power supply voltage of IC card 500 will not become unstable.

Next, a case where two IC cards 500 are moved away from the reader-writer is described.

As illustrated in FIG. 11B, as IC cards 500 are moved away from the reader-writer, current Irect decreases. When distance d changes to distance dm1B and current Irect falls below threshold Ith × n, the UpDown signal changes to the L level, control signal CRES[3:0] transitions from 0b0000 to 0b0001, and the resonance frequency decreases from fdm45 to fdm34. Since resonance frequency fdm45 approximately matches carrier frequency fc, the value of current Irect at resonance frequency fdm34 which has deviated from carrier frequency fc is smaller than the value of current Irect at resonance frequency fdm45. Thus, also after the transition of the resonance frequency to fdm34, current Irect is smaller than threshold Ith × n. As such, the resonance frequency sequentially transitions from fdm45 to fdm34 to fdm23 to fdm12 almost instantaneously. Likewise, the resonance frequency is as below, depending on distance d.$dm 0 > = d > = dm 1 B : fdm 01 = 1 / \left\{2\times π\times √\left(\left(L+M\right)\times \left(Cr0\times 4+Crf\right)\right)\right\}$ $d = dm 1 B : fdm 12 = 1 / \left\{2\times π\times √\left(\left(L+M\right)\times \left(Cr0\times 3+Crf\right)\right)\right\}$ $d = dm 1 B : fdm 23 = 1 / \left\{2\times π\times √\left(\left(L+M\right)\times \left(Cr0\times 2+Crf\right)\right)\right\}$ $d = dm 1 B : fdm 34 = 1 / \left\{2\times π\times √\left(\left(L+M\right)\times \left(Cr0\times 1+Crf\right)\right)\right\}$ $dm 1 B > = d : fdm 45 = 1 / \left\{2\times π\times √\left(\left(L+M\right)\times \left(Cr0\times 0+Crf\right)\right)\right\}$

At distance dm1B, current Irect changes according to the change in the resonance frequency. Threshold Ith × n is set to a value greater than dImB that is a change amount of current Irect illustrated in FIG. 11B. By doing so, even if the resonance frequency undergoes a transition, it is possible to satisfy Irect > Iload, which can avoid the power supply voltage of IC card 500 becoming unstable.

Thus, when the detection signal (UpDown signal) of detector 507 indicates that the current value of the detection current (current Idet) correlated with shunt current Iss is less than or equal to the first detection current threshold (Ith × n), resonance frequency controller 509 may control resonance frequency variable circuit 502 to decrease the resonance frequency of coil antenna 501. When the detection signal (UpDown signal) of detector 507 indicates that the current value of the detection current (current Idet) is greater than the first detection current threshold (Ith × n), resonance frequency controller 509 may control resonance frequency variable circuit 502 to increase the resonance frequency of coil antenna 501.

Shunt current Iss is a current corresponding to an excess current, and accordingly, the current value of the detection current (current Idet) is correlated with the current value of the excess current. The current value of current Idet increases with a decrease in distance d between IC card 500 and the reader-writer. In other words, the current value of current Idet decreases with an increase in distance d between IC card 500 and the reader-writer. For instance, the resonance frequency of coil antenna 501 at the operation start time of single IC card 500 is set to lowest value fds01 of the resonance frequency within the range where resonance frequency variable circuit 502 can change the resonance frequency, and lowest value fds01 is set to carrier frequency fc. Moreover, threshold Ith × n is set to a value suitable for a sufficient excess current.

When single IC card 500 is brought near the reader-writer, the current value of current Idet gradually increases. When the current value of current Idet exceeds threshold Ith × n, the resonance frequency is increased. Thus, the resonance frequency deviates from carrier frequency fc, and an excess current decreases. However, even if the excess current decreases to some extent from the state where the excess current is sufficiently flowing, the minimum voltage for IC card 500 to operate can be maintained. Meanwhile, when single IC card 500 is moved away from the reader-writer, the current value of current Idet gradually decreases. When the current value of current Idet becomes less than or equal to threshold Ith × n, the resonance frequency is decreased. Thus, the resonance frequency approaches carrier frequency fc, and the excess current increases, which can maintain the minimum voltage for IC card 500 to operate.

In a state where IC cards 500 are on top of each other, the resonance frequency of coil antennas 501 is low in comparison with single IC card 500. Thus, the resonance frequency at the operation start time of stacked IC cards 500 is lower than carrier frequency fc. When stacked IC cards 500 are brought near the reader-writer, the current value of current Idet gradually increases. When the current value of current Idet exceeds threshold Ith × n, the resonance frequency is increased. Thus, the resonance frequency approaches carrier frequency fc, and the excess current increases, which can maintain the minimum voltage for IC card 500 to operate. Meanwhile, when stacked IC cards 500 are moved away from the reader-writer, the current value of current Idet gradually decreases. When the current value of current Idet becomes less than or equal to threshold Ith × n, the resonance frequency is decreased. Thus, the resonance frequency deviates from carrier frequency fc, and an excess current decreases. However, even if the excess current decreases to some extent from the state where the excess current is sufficiently flowing, the minimum voltage for IC card 500 to operate can be maintained.

As such, in both cases of single IC card 500 and stacked IC cards 500, it is possible to maintain the minimum voltage for IC card 500 to operate, when the resonance frequency is corrected, and achieve stable operation of IC card 500.

For instance, threshold Ith × n may be a value greater than a difference between currents Irect before and after the resonance frequency of coil antenna 501 is changed.

Thus, by setting threshold Ith × n to a value greater than the difference in current Irect caused by the change in the resonance frequency, it is possible to suppress a situation in which an excess current no longer occurs due to the change in the resonance frequency, that is, a situation in which the minimum voltage for IC card 500 to operate is no longer able to be maintained.

FIG. 12 is a time chart of control signal CRES[3:0] controlled by resonance frequency controller 509 according to Embodiment 1.

An RF (electromagnetic wave) signal indicates an envelope waveform of electromagnetic waves transmitted from the reader-writer, and data is transmitted by amplitude modulation (AM) to IC card 500. FIG. 12 illustrates an example in which data is Manchester coded. Moreover, FIG. 12 illustrates an example of a communication standard in which specific pre-data is transmitted before transmission of a command.

When receiving a command following the pre-data (48-bit zero data in Embodiment 1), IC card 500 performs data processing according to the command, and transmits response data.

Clock signal CLK_d is a signal for sampling an UpDown signal, and a signal with sampling period t_CLK. In the period during which the logic level of a HOLD signal is the L level, at the rise timing of clock signal CLK_d, the state of control signal CRES[3:0] is updated according to the state of the UpDown signal. In the period during which the logic level of the HOLD signal is the H level, the state of control signal CRES[3:0] is maintained.

In an example provided in Embodiment 1, after receiving demodulated signal RX of 0 four times in a row, IC card 500 performs control to transition the level of the HOLD signal to the H level, and after transmitting the response data, IC card 500 performs control to transition the level of the HOLD signal to the L level. Amplitude modification (AM) is performed in a cycle of data rate t_EU.

When control signal CRES[3:0] undergoes a transition and the resonance frequency changes, the envelope waveform of the RF signal is affected. When control signal CRES[3:0] undergoes a transition during data transmission by the reader-writer, there is a concern that demodulated signal RX changes and IC card 500 cannot properly receive transmission data from the reader-writer. Moreover, when control signal CRES[3:0] undergoes a transition while the reader-writer is receiving response from IC card 500, there is a concern that the envelope waveform of the RF signal is affected and the reader-writer cannot properly receive the response from IC card 500. Here, the above concerns are described with reference to FIG. 13.

FIG. 13 is a time chart of an IC card system having the function of changing the resonance frequency.

An RF (electromagnetic wave) signal indicates the envelope waveform of electromagnetic waves transmitted from the reader-writer, and data is transmitted by amplitude modulation (AM) to an IC card. FIG. 13 illustrates an example in which data is Manchester coded. Moreover, FIG. 13 illustrates an example of a communication standard in which specific pre-data is transmitted before transmission of a command. Demodulated signal RX is an internal signal of the IC card obtained by demodulating the RF signal. Transmission data TX is response data that is data to be transmitted by the IC card to the reader-writer according to the command. FIG. 13 illustrates a situation in which the resonance frequency changes from fa0 to fa1 to fa2 to fa3 to fa4 in a certain cycle. When the resonance frequency changes, the impedance between terminal VA and terminal VB changes. Thus, the envelope of the RF (electromagnetic wave) signal changes. Each of t_fa1, t_fa2, and t_fa3 in FIG. 13 indicates a time at which transmission data may not be properly received in a case where the resonance frequency changes in the period during which the IC card is performing a reception operation. There is a concern that an effect caused by the change in the impedance between terminal VA and terminal VB is superimposed onto the amplitude **modulation** (AM) waveform of the RF signal and demodulation cannot be properly performed. Moreover, t_fa4 in FIG. 13 indicates a time at which the response may not be properly received in a case where the resonance frequency changes in the period during which the IC card is transmitting the response data. There is a concern that an effect caused by the change in the impedance between terminal VA and terminal VB is superimposed onto the amplitude modulation (AM) waveform of the RF signal and the response data may be transmitted by error to the reader-writer.

Thus, the change of the resonance frequency may be avoided in a period in which the reader-writer transmits data and in a period in which IC card 500 transmits response.

For instance, by setting sampling period t_CLK to be greater than or equal to 4 × t_EU, it is possible to provide at least 4 × t_EU periods in which control signal CRES[3:0] does not change. By transitioning the level of the HOLD signal to the H level before the reader-writer transmits a command, it is possible to avoid changing the resonance frequency.

Thus, receiver 503 receives data on the basis of a signal obtained by coil antenna 501, and controller 508 controls, according to the data, the execution and stop of the operation of changing the resonance frequency of coil antenna 501, performed by resonance frequency controller 509. When the resonance frequency of coil antenna 501 changes while IC card 500 is receiving data from the reader-writer, IC card 500 may not be able to properly receive the data. Thus, when IC card 500 is receiving the data, it is possible to stop the operation of changing the resonance frequency.

FIG. 14 is a time chart illustrating a transition of each of a rectified output current (current Irect), load current Iload (Icc or Istb), and power supply voltage Vcc when communication is being performed between single IC card 500 according to Embodiment 1 and the reader-writer.

An RF (electromagnetic wave) signal indicates the envelope waveform of electromagnetic waves transmitted from the reader-writer, and data is transmitted by amplitude modulation (AM) to IC card 500. At time t_fc0, an excess current (current Irect - load current Iload) being greater than the first detection current threshold (threshold Ith × n) is detected, and the resonance frequency transitions from fds34 to fds45. Current Irect after the resonance frequency transitions to fds45 is lower than current Irect when the resonance frequency is fds34. IC card 500 receives a command in the period from time t_fc1 to time t_fc2, data processing starts after time t_fc2, and load current Iload increases from Istb to Icc.

When the reader-writer transmits an amplitude modulation (AM) signal (a command) and receiver 503 receives the command, load current Iload increases according to the command. When the change amount (Icc - Istb) is a value greater than a detection current threshold (Ith × n) for a detection current (current Idet), there is an issue in which current Irect falls below load current Iload, power supply voltage Vcc decreases, and the operation of IC card 500 becomes unstable.

The issue is explained with reference to FIG. 15.

FIG. 15 is a time chart illustrating a transition of each of the rectified output current (current Irect), load current Iload, and power supply voltage Vcc of an IC card system having the function of changing the resonance frequency.

An RF (electromagnetic wave) signal indicates the envelope waveform of electromagnetic waves transmitted from the reader-writer, and data is transmitted by amplitude modulation (AM) to an IC card. At time t_fb0, voltage Vcc being greater than voltage Vo is detected, and the resonance frequency transitions from fb0 to fb1. When resonance frequency fb0 is the same as carrier frequency fc, current Irect decreases. The IC card receives a command in the period from time t_fb1 to time t_fb2, data processing starts after time t_fb2, and load current Iload increases from Istb to Icc.

Here, when current Irect becomes less than or equal to Icc, it is no longer able to maintain, as power supply voltage Vcc, minimum voltage Vo for an IC card to operate, and the operation of the IC card stops. A conventional method for changing the resonance frequency according to, for example, the power supply voltage has the issue of not being able to maintain a rectified output current necessary at the time of rapid increase of an operation current.

By contrast, by setting current Ith as below in consideration of the operation current of IC card 500, even when the operation current of IC card 500 rapidly increases due to the change in the resonance frequency, as illustrated in FIG. 14, it is possible to suppress a situation in which current Irect falls below load current Iload, which enables stable operation of IC card 500.$\begin{matrix}Ith > \left\{\left(Icc-Istb\right)+dImax\right\} / n \\ dImax = Irect_fc 34 - Irect_fc 45\end{matrix}$

Thus, controller 508 may have at least a first state (the state in which the current value of load current Iload is Istb) and a second state (the state in which the current value of load current Iload is Icc). Resonance frequency variable circuit 502 may be a circuit for changing the resonance frequency of coil antenna 501 to at least a fifth resonance frequency and a sixth resonance frequency. For instance, the fifth resonance frequency is one of resonance frequencies fds01 to fds34, and the sixth resonance frequency is one of resonance frequencies fds12 to fds45 that is higher than the fifth resonance frequency. The first detection current threshold may be greater than a value obtained by adding (i) a value obtained by subtracting the current value of the rectified output current when the resonance frequency of coil antenna 501 is the sixth resonance frequency from the current value of the rectified output current when the resonance frequency of coil antenna 501 is the fifth resonance frequency and (ii) a value obtained by subtracting the value of load current Iload (Istb) in the first state from the value of load current Iload (Icc) in a second state.

In IC card 500, load current Iload in the state (second state) in which controller 508 is performing data processing is greater than that in the state (first state) in which controller 508 is not performing data processing. Thus, by setting the first detection current threshold in consideration of load current Iload (Icc) in the second state, it is possible to suppress a situation in which an excess current no longer occurs due to the change in the resonance frequency, that is, a situation in which the minimum voltage for IC card 500 to operate is no longer able to be maintained.

It should be noted that in addition to the first state and the second state, controller 508 may have a state in which load current Iload differs from load current Iload in the first state and load current Iload in the second state.

As described above, in Embodiment 1, in both cases of single IC card 500 and stacked IC cards 500, if a certain quantity of excess current is not generated, the resonance frequency of coil antenna 501 will not be changed (corrected). In other words, when a certain quantity of excess current is generated, the resonance frequency of coil antenna 501 is corrected. Thus, in both cases of single IC card 500 and stacked IC cards 500, it is possible to maintain the minimum voltage for IC card 500 to operate, when the resonance frequency is corrected, and achieve stable operation of IC card 500. This enables stable operation of transmission and reception between IC card 500 and the reader-writer. It should be noted that the same applies to Embodiments 2 and 3 described later.

### (Embodiment 2)

FIG. 16 illustrates a configuration of contactless IC card 500a according to Embodiment 2.

As a difference from IC card 500 according to Embodiment 1, IC card 500a includes resonance frequency variable circuit 511, detector 513, and resonance frequency controller 512 instead of resonance frequency variable circuit 502, detector 507, and resonance frequency controller 509. Since coil antenna 501, receiver 503, transmitter 504, rectifier 505, power supply 506, controller 508, and smoothing capacitor 510 are constituent elements similar to those described in Embodiment 1, detailed explanations of the elements are omitted.

FIG. 17 illustrates a configuration of resonance frequency variable circuit 511.

FIG. 17 illustrates a configuration of resonance frequency variable circuit 511 in Embodiment 2.

One end of capacitive element 524 is connected to terminal VA, and the other end of capacitive element 524 is connected to terminal VB. One end of capacitive element 560 is connected to terminal VA, and the other end of capacitive element 560 is connected to terminal VB via switching element 561. Switching element 561 becomes conductive when the logic level of control signal CRES_S changes to an H level, and switching element 561 is brought to an off-state when the logic level of control signal CRES_S changes to an L level. Inductance L of coil antenna 501 and at least capacitive element 524 among capacitive element 524 and capacitive element 560 included in resonance frequency variable circuit 511 constitute an LC resonance circuit.

Resonance frequency controller 512 performs control of control signal CRES_S according to an UpDown signal and hold control of control signal CRES_S according to a HOLD signal.

FIG. 18 illustrates a configuration of detector 513.

FIG. 18 illustrates a configuration of detector 513 in Embodiment 2.

Since p-type MOSFET 550, constant voltage source 551, comparator 552, constant current source 553, and current mirror 554 are constituent elements similar to those described in Embodiment 1, detailed explanations of the elements are omitted. Constant current source 555 is a low constant current source that passes current Iths having a current value smaller than that of current Ith. Conduction/non-conduction control is performed on switching elements 556 and 557 according to the state of an UpDown signal. When the UpDown signal is an L level, switching element 556 becomes conductive, and switching element 557 is brought to an off-state. When the UpDown signal is an H level, switching element 557 becomes conductive, and switching element 556 is brought to an off-state.

FIGS. 19A and 19B each illustrate a relationship between a rectified output current (current Irect) and distance d between single IC card 500a according to Embodiment 2 and a reader-writer. FIG. 19A illustrates the relationship when IC card 500a is brought near the reader-writer, whereas FIG. 19B illustrates the relationship when IC card 500a is moved away from the reader-writer. First, a case where single IC card 500a is brought near the reader-writer is described.

Load current Iload is current consumption of IC card 500a. As illustrated in FIG. 19A, when the rectified output current exceeds load current Iload, IC card 500a starts operating (distance dss0). Control signal CRES_S when IC card 500a starts operating is set to 0b1, and capacitance Cr_S of capacitive element 560 and capacitance Crf_S of capacitive element 524 are so set as to satisfy the following expression to cause the resonance frequency of coil antenna 501 to approximately match carrier frequency fc.$fc ≒ fdss 01 = 1 / \left\{2\times π\times √\left(L\times \left(Cr_S+Crf_S\right)\right)\right\}$

When distance d becomes less than distance dss0, current Irect increases. When distance d changes to distance dss1 and current Irect exceeds threshold Ith × n (a first detection current threshold), the UpDown signal changes from the L level to the H level, control signal CRES_S transitions to 0b0, and the resonance frequency increases to fdss12 indicated below.$fdss 12 = 1 / \left\{2\times π\times √\left(L\times Crf_S\right)\right\}$

When the UpDown signal transitions from the L level to the H level, switching element 556 of detector 513 is brought to an off-state, switching element 557 becomes conductive, and the input current of current mirror 554 changes from current Ith to current Iths. This can prevent the UpDown signal from chattering.

At distance dss1, current Irect changes according to the change in the resonance frequency. Threshold Ith × n is set to a value greater than dIs that is a change amount of current Irect illustrated in FIG. 19A. By doing so, even if the resonance frequency undergoes a transition, it is possible to satisfy Irect > Iload, which can avoid the power supply voltage of IC card 500a becoming unstable.

Next, a case where single IC card 500a is moved away from the reader-writer is described.

As illustrated in FIG. 19B, current Irect decreases as IC card 500a is moved away from the reader-writer. When distance d changes to distance dss1B and current Irect falls below threshold Iths × n (a second detection current threshold), the UpDown signal changes to the L level, control signal CRES_S transitions from 0b0 to 0b1, the resonance frequency decreases from fdss12 to fdss01, and current Irect increases. At distance dss1B where the resonance frequency is changed, current Irect does not fall below load current Iload, and the power supply voltage of IC card 500a will not become unstable.

FIGS. 20A and 20B each illustrate a relationship between a rectified output current (current Irect) and distance d between two IC cards 500a according to Embodiment 2 and the reader-writer. FIG. 20A illustrates the relationship when two IC cards 500a are brought near the reader-writer, whereas FIG. 20B illustrates the relationship when two IC cards 500a are moved away from the reader-writer. First, a case where two IC cards 500a are brought near the reader-writer is described.

As illustrated in FIG. 20A, when the rectified output current exceeds load current Iload, IC cards 500a starts operating (distance dms0). Control signal CRES_S when IC cards 500a starts operating is set to 0b1. When distance d becomes less than distance dms0, current Irect increases. When distance d changes to distance dms1 and current Irect exceeds threshold Ith × n (the first detection current threshold), the UpDown signal changes to the H level, control signal CRES_S transitions to 0b0, and the resonance frequency of coil antenna 501 increases to fdms12 indicated below.$fdms 12 = 1 / \left\{2\times π\times √\left(\left(L+Μ\right)\times \left(Cr0\times 3+Crf\right)\right)\right\}$

When the UpDown signal transitions from the L level to the H level, switching element 556 is brought to an off-state, switching element 557 becomes conductive, and the input current of current mirror 554 changes from current Ith to current Iths. The resonance frequency is controlled according to distance d as below. 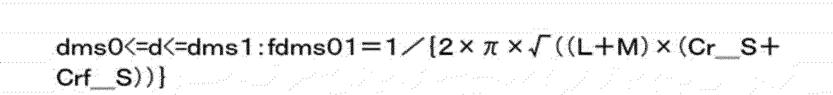 dmsO<=d<=dms1:fdms01=1/{2 × π × √ ((L+M) × (Cr_S+ Crf_S))} $d < = dms 1 : fdms 12 = 1 / \left\{2\left.\times π\times √\left(\left(L+M\right)\times Crf_S\right)\right\}\right\}$

Capacitance Crf_S is set to cause resonance frequency fdms12 of two IC cards 500a to approximately match carrier frequency fc. By doing so, under the condition that distance d is less than distance dms1, IC cards 500a can be operated in a state where the resonance frequency matches carrier frequency fc.

Next, a case where two IC cards 500a are moved away from the reader-writer is described.

As illustrated in FIG. 20B, current Irect decreases as IC cards 500a are moved away from the reader-writer. When distance d changes to distance dms1B and current Irect falls below threshold Iths × n (the second detection current threshold), the UpDown signal changes to the L level, control signal CRES_S transitions from 0b0 to 0b1, the resonance frequency decreases from fdss12 to fdss01, and current Irect decreases. At distance dss1B where the resonance frequency is changed, current Irect falls below load current Iload, and the operation of IC cards 500a stops. When IC cards 500a are moved away from the reader-writer, it is possible to increase the communication distance, compared with when IC cards 500a are brought near the reader-writer.

FIG. 21 illustrates a relationship between the resonance frequency and the rectified output current when communication is performed between single IC card 500a and the reader-writer.

Single IC card 500a starts operating at a resonance frequency of f0. Resonance frequency of f0 is the resonance frequency when the rectified output current becomes the largest current (point A in FIG. 21), and it is possible to maximize the communication distance of IC card 500a. When the rectified output current becomes greater than (the first detection current threshold (threshold Ith × n) + load current Iload of IC card 500a), control to increase the resonance frequency is performed, and the resonance frequency increases up to f0u at point B in FIG. 21. Although the rectified output current decreases in the section between point A and point B in FIG. 21, the rectified output current does not fall below load current Iload of IC card 500a. Thus, at least minimum operation voltage Vo can be guaranteed, and stable operation of IC card 500a can be performed.

FIG. 22 illustrates a relationship between the resonance frequency and the rectified output current when communication is performed between two IC cards 500a and the reader-writer.

Two IC cards 500a start operating at a resonance frequency of f1. The rectified output current at point A in FIG. 22 is the rectified output current at a resonance frequency of f1, and is equal to (the first detection current threshold (threshold Ith × n) + load current Iload of IC card 500a).

When the rectified output current exceeds (the first detection current threshold + the load current of the IC card), control to increase the resonance frequency is performed, and the resonance frequency increases up to resonance frequency f2 at point B in FIG. 22. By controlling the value of C indicated below to the value of C2 to cause resonance frequency f2 to be equal to carrier frequency fc, it is possible to maximize the rectified output current, and further match the resonance frequency and carrier frequency fc. Thus, transmission characteristics can be improved (a null point will not occur).$f 1 = 1 / \left[2\times π\times √\left\{\left(L+M\right)\times C\right\}\right]$ $f 2 = 1 / \left[2\times π\times √\left\{\left(L+M\right)\times C2\right\}\right] = fc$

Thus, resonance frequency variable circuit 511 may be a circuit for changing the resonance frequency of coil antenna 501 to at least a first resonance frequency and a second resonance frequency, and the second resonance frequency is higher than the first resonance frequency. For instance, the first resonance frequency is a resonance frequency of f0, and the second resonance frequency is a resonance frequency of f0u. In a situation where IC card 500a is a single IC card and receives power between the reader-writer and coil antenna 501, current Irect when the resonance frequency of coil antenna 501 is the first resonance frequency is larger than current Irect when the resonance frequency of coil antenna 501 is the second resonance frequency.

For instance, the resonance frequency of coil antenna 501 at the operation start time of single IC card 500a is set to the first resonance frequency. When the resonance frequency of coil antenna 501 of single IC card 500a is increased from the first resonance frequency to the second resonance frequency, the resonance frequency of coil antenna 501 deviates from carrier frequency fc, and current Irect decreases. However, since the resonance frequency is changed in a state in which a certain quantity of excess current is generated, it is possible to maintain a minimum voltage for IC card 500a to operate. In a state where IC cards 500a are on top of each other, the resonance frequency of coil antennas 501 is low in comparison with single IC card 500a. Thus, the resonance frequency at the operation start time of stacked IC cards 500a is lower than carrier frequency fc. When the resonance frequency of coil antennas 501 of stacked IC cards 500a is increased from the first resonance frequency to the second resonance frequency, the resonance frequency of coil antennas 501 approaches carrier frequency fc, and current Irect increases. Thus, it is possible to maintain the minimum voltage for IC card 500a to operate.

As such, in both cases of single IC card 500a and stacked IC cards 500a, it is possible to maintain the minimum voltage for IC card 500a to operate, when the resonance frequency is corrected, and achieve stable operation of IC card 500a.

Moreover, resonance frequency variable circuit 511 may be a circuit for changing the resonance frequency of coil antenna 501 to at least a third resonance frequency or a fourth resonance frequency. For instance, the third resonance frequency is a resonance frequency of fdss01, and the fourth resonance frequency is a resonance frequency of fdss12. Moreover, comparator 552 of detector 513 may compare the current value of current Idet and the first detection current threshold (threshold Ith × n) or compare the current value of current Idet and the second detection current threshold (threshold Iths × n) smaller than the first detection current threshold, and output a comparison result as the UpDown signal. When the UpDown signal indicates that the current value of current Idet is greater than threshold Ith × n, resonance frequency controller 512 may control resonance frequency variable circuit 511 to change the resonance frequency of coil antenna 501 to the fourth resonance frequency. When the UpDown signal indicates that the current value of current Idet is less than or equal to threshold Iths × n, resonance frequency controller 512 may control resonance frequency variable circuit 511 to change the resonance frequency of coil antenna 501 to the third resonance frequency.

Shunt current Iss is a current corresponding to an excess current, and accordingly, the current value of the current Idet is correlated with the current value of the excess current. The current value of current Idet increases with a decrease in distance d between IC card 500a and the reader-writer. In other words, the current value of current Idet decreases with an increase in distance d between IC card 500a and the reader-writer. For instance, the resonance frequency of coil antenna 501 at the operation start time of single IC card 500a is set to the third resonance frequency, and the third resonance frequency is set to carrier frequency fc. Moreover, threshold Ith × n is set to a value suitable for a sufficient excess current.

When single IC card 500a is brought near the reader-writer, the current value of current Idet gradually increases. When the current value of current Idet exceeds threshold Ith × n, the resonance frequency is increased to the fourth resonance frequency. Thus, the resonance frequency deviates from carrier frequency fc, and an excess current decreases. However, even if the excess current decreases to some extent from the state where the excess current is sufficiently flowing, it is possible to maintain the minimum voltage for IC card 500a to operate. Meanwhile, when single IC card 500a is moved away from the reader-writer, the current value of current Idet gradually decreases. When the current value of current Idet becomes less than or equal to threshold Iths × n, the resonance frequency is decreased to the third resonance frequency. Thus, since the resonance frequency approaches carrier frequency fc and the excess current increases, it is possible to maintain the minimum voltage for IC card 500a to operate.

In a state where IC cards 500a are on top of each other, the resonance frequency of coil antennas 501 is low in comparison with single IC card 500a. Thus, the resonance frequency at the operation start time of stacked IC cards 500a is lower than carrier frequency fc. When stacked IC cards 500a are brought near the reader-writer, the current value of current Idet gradually increases. When the current value of current Idet exceeds threshold Ith × n, the resonance frequency is increased. Thus, since the resonance frequency approaches carrier frequency fc and the excess current increases, it is possible to maintain the minimum voltage for IC card 500a to operate. Meanwhile, when stacked IC cards 500a are moved away from the reader-writer, the current value of current Idet gradually decreases. When the current value of current Idet becomes less than or equal to threshold Iths × n, the resonance frequency is decreased. Thus, the resonance frequency deviates from carrier frequency fc, and the excess current decreases. However, since threshold Iths × n is smaller than threshold Ith × n, the timing when the excess current decreases is after IC cards 500a are further moved away from the reader-writer from when the current value of current Idet is compared with threshold Ith × n. Accordingly, when IC cards 500a are moved away from the reader-writer, it is possible to increase the communication distance between IC cards 500a and the reader-writer.

Moreover, threshold Ith × n may be a value greater than a value obtained by subtracting the current value of current Irect when the resonance frequency of coil antenna 501 is the fourth resonance frequency from the current value of current Irect when the resonance frequency of coil antenna 501 is the third resonance frequency.

Thus, by setting threshold Ith × n to a value greater than a difference in current Irect caused by the change from the third resonance frequency to the fourth resonance frequency, it is possible to suppress a situation in which an excess current no longer occurs due to the change in the resonance frequency, that is, a situation in which the minimum voltage for IC card 500a to operate is no longer able to be maintained.

Moreover, in Embodiment 2, the number of the switching elements of resonance frequency variable circuit 511 can be decreased, and the circuit area can be reduced, in comparison with the configuration in Embodiment 1.

### (Embodiment 3)

FIG. 23 illustrates a configuration of contactless IC card 500b according to Embodiment 3.

As a difference from IC card 500a according to Embodiment 2, IC card 500b includes controller 514 and resonance frequency controller 515 instead of controller 508 and resonance frequency controller 512. Since coil antenna 501, receiver 503, transmitter 504, rectifier 505, power supply 506, smoothing capacitor 510, resonance frequency variable circuit 511, and detector 513 are constituent elements similar to those described in Embodiment 2, detailed explanations of the elements are omitted.

Controller 514 performs predetermined processing according to demodulated signal RX, and outputs predetermined response data as transmission data TX. Moreover, when detecting that demodulated signal RX is a predetermined command, controller 514 outputs a MATCH signal or an UNMATCH signal.

Resonance frequency controller 515 performs control of control signal CRES_S according to the UpDown signal and the MATCH signal or UNMATCH signal.

FIGS. 24A and 24B illustrate time charts when a reader-writer transmits, to IC card 500b (IC card A) according to Embodiment 3, a command to IC card A.

FIG. 24A is a time chart when the UpDown signal is at an L level, and FIG. 24B is a time chart when the UpDown signal is at an H level.

An RF (electromagnetic wave) signal indicates the envelope waveform of electromagnetic waves transmitted from the reader-writer, and data is transmitted by amplitude modulation (AM) to IC card 500b. A command transmitted from the reader-writer includes an ID unique to IC card 500b, and the ID specifies IC card 500b on which processing is to be performed. For instance, when the command transmitted from the reader-writer includes the ID of IC card A, IC card A can be specified as IC card 500b on which processing is to be performed. When the ID of IC card A matches the ID of the command, controller 514 of IC card A outputs, as the MATCH signal, a pulse signal whose level will be the H level in a predetermined period. Synchronizing with the rise of the MATCH signal, resonance frequency controller 515 performs control of control signal CRES_S according to the state of the UpDown signal. When the UpDown signal is at the L level, resonance frequency controller 515 holds (does not change) control signal CRES_S. When the UpDown signal is at the H level, resonance frequency controller 515 performs control to transition control signal CRES_S to the L level and increase the resonance frequency. When the UpDown signal is at the H level, a rectified output current (current Irect) is greater than or equal to (load current Iload + threshold Ith × n). Since current Irect is larger than load current Iload even after the resonance frequency is changed, it is possible to stabilize the operation of IC card 500b.

FIG. 25 is a time chart when the reader-writer transmits, to IC card 500b (IC card A) according to Embodiment 3, a command to an IC card other than IC card A. When the ID of IC card A does not match the ID of the command, controller 514 of IC card A outputs, as the UNMATCH signal, a pulse signal whose level will be the H level in a predetermined period. Synchronizing with the rise of the UNMATCH signal, resonance frequency controller 515 performs, regardless of the state of the UpDown signal, control to transition control signal CRES_S to the L level and increase the resonance frequency. Since the reader-writer transmits at least one command to at least one IC card other than IC card A, it is understood that a situation is created in which communication is performed between two or more IC cards 500b and the reader-writer, that is, a situation is created in which the resonance frequency is lower than carrier frequency fc. In this case, current Irect can be increased by bringing the resonance frequency closer to carrier frequency fc through control to increase the resonance frequency. This enables current Irect to be larger than load current Iload, thereby avoiding the operation of IC card 500b becoming unstable.

In this way, controller 514 determines whether the ID indicated by the received data matches the ID of IC card 500b. When the IDs do not match, regardless of the UpDown signal, controller 514 executes the operation of changing the resonance frequency of coil antenna 501, performed by resonance frequency controller 515.

When the ID of the IC card matches the ID of the command, since it is not known as to whether there is single IC card 500b or stacked IC cards 500b, the resonance frequency is changed according to the UpDown signal. Meanwhile, when the ID of the IC card does not match the ID of the command, since IC cards 500b are on top of each other (that is, the resonance frequency is low), the resonance frequency can be compulsorily increased regardless of the UpDown signal, which can bring the resonance frequency closer to carrier frequency fc.

### (Other Embodiments)

As described above, Embodiments 1, 2, and 3 are described as exemplifications of the technique according to the present invention. However, the technique according to the present invention is not limited to those described in the embodiments, and the technique is applicable to an embodiment obtained by appropriately performing a change, replacement, addition, and omission, for example. For instance, the following variation is included in an embodiment of the present invention.

In Embodiments 1, 2, and 3, the system in which communication is performed between a single or two IC cards and a reader-writer is described. However, the present invention is applicable to a system in which communication is performed between three or more IC cards and a reader-writer.

Moreover, in Embodiments 1, 2, and 3, the control method for increasing the resonance frequency to a frequency higher than the carrier frequency. However, the present invention is applicable to control to decrease the resonance frequency to a frequency lower than the carrier frequency.

Moreover, in Embodiments 1, 2, and 3, the method for changing the capacitance of the resonance frequency controller which serves as a constituent element that changes the resonance frequency is described. However, the present invention is applicable to a method for changing the inductance of a coil antenna.

Moreover, in Embodiments 1, 2, and 3, an example in which an IC card includes power supply 506 is described. However, the IC card need not include power supply 506.

Moreover, in Embodiments 1, 2, and 3, the contactless communication device is described as an IC card, and the communication system between the IC card and the reader-writer is described. However, the present invention is also applicable to control of the resonance frequency in a general contactless data communication system. For instance, the IC card stated in the Specification can be replaced with an IC tag.

Moreover, in Embodiments 2 and 3, an example in which a resonance frequency variable circuit includes two capacitive elements is described. However, as with Embodiment 1, the resonance frequency variable circuit may include three or more capacitive elements.

For instance, the present invention can be achieved not only as a contactless communication device but also as a control method including steps (processes) performed by a constituent element (for example, a resonance frequency controller) of the contactless communication device.

FIG. 26 is a flowchart illustrating an example of a control method according to another embodiment.

A control method is a control method for controlling a contactless communication device, the contactless communication device including: an antenna that receives power from a transceiver device through contactless communication; a resonance frequency variable circuit that changes a resonance frequency of the antenna; a rectifier that rectifies an antenna output current output by the antenna; a load circuit that consumes a load current; and a detector that detects an excess current that is a difference between a rectified output current output by the rectifier and the load current. As illustrated in FIG. 26, the control method includes: obtaining a detection signal output by the detector and indicating a detection result of the excess current (step S11); and changing the resonance frequency of the antenna by controlling the resonance frequency variable circuit according to the detection signal (step S12).

For instance, the present invention can be achieved as a program for causing a computer (processor) to execute the steps included in the control method. Furthermore, the present invention can be achieved as a non-transitory computer-readable recording medium having recorded thereon the program, such as a CD-ROM.

For instance, when the present invention is achieved as a program (software), the steps are performed by the program being executed using hardware resources such as the CPU, memory, and input/output circuit of a computer. That is, the steps are performed by the CPU obtaining data from, for example, the memory or the input/output circuit, performing calculation, and outputting a calculation result to, for example, the memory or the input/output circuit.

It should be noted that in the above embodiments, each of the constituent elements included in the contactless communication device may be configured as dedicated hardware or may be achieved by executing a software program suitable for the constituent element. The constituent element may be achieved by a program executer, such as a CPU or a processor, reading out and executing a software program stored in a recording medium, such as a hard disk or semiconductor memory.

Some or all of the functions of the contactless communication device according to the above embodiments are achieved as an LSI, which is typically an integrated circuit. These functions may be individually included in one chip, or some or all of the functions may be included in one chip. Moreover, circuit integration is not limited to an LSI, and may be achieved as a dedicated circuit or a general-purpose processor. A field programmable gate array (FPGA) that can be programmed after manufacturing of an LSI or a reconfigurable processor in which connection and settings of circuit cells inside an LSI are reconfigurable may be used.

Furthermore, if a circuit integration technology that will replace an LSI appears with development of the semiconductor technology or advent of another derivative technology, the constituent elements included in the contactless communication device may be of course integrated using the new technology.

The present invention encompasses embodiments obtained by adding various changes envisioned by those skilled in the art to the embodiments and encompasses embodiments achieved by optionally combining constituent elements and functions in embodiments, as long as the resultant embodiments do not depart from the scope of the appended claims.

### [Reference Signs List]

101 reader-writer
102, 504 transmitter
103, 503 receiver
104, 112, 212, 501 coil antenna
105, 113, 213 resonance capacitor
111, 211 IC card
114, 214, 505 rectifier
115, 215 load circuit
500, 500a, 500b IC card
502, 511 resonance frequency variable circuit
506 power supply
507, 513 detector
508, 514 controller
509, 512, 515 resonance frequency controller
510 smoothing capacitor
520, 521, 522, 523, 524, 560 capacitive element
525, 526, 527, 528, 556, 557, 561 switching element
530, 531, 532, 533 diode element
540, 551 constant voltage source
541, 552 comparator
542, 550 p-type MOSFET
543, 544 resistance element
553, 555 constant current source
554 current mirror

## Claims

1. A contactless communication device comprising:
an antenna (104, 112, 212, 501) that receives power from a transceiver device through contactless communication;
a resonance frequency variable circuit (502, 511) that changes a resonance frequency of the antenna (104, 112, 212, 501);
a rectifier (114, 214, 505) that rectifies an antenna output current output by the antenna (104, 112, 212, 501); and
a load circuit (115, 215) that consumes a load current;
wherein the contactless communication device is **characterized by** further comprising
a detector (507, 513) that detects an excess current that is a difference between a rectified output current output by the rectifier (114, 214, 505) and the load current; and
a resonance frequency controller (509, 512, 515) that changes the resonance frequency of the antenna (104, 112, 212, 501) by controlling the resonance frequency variable circuit (502, 511) according to a detection signal output by the detector (507, 513) and indicating a detection result of the excess current.

2. The contactless communication device according to claim 1, further comprising:
a power supply (506) that generates, from the rectified output current, a predetermined power supply voltage to be applied to the load circuit (115, 215), wherein
the power supply (506) includes a shunt power supply circuit that supplies a shunt current to a ground reference electric potential according to an input voltage of the power supply (506) and the predetermined power supply voltage,
the detector (507, 513) includes:
a current detection circuit that outputs a detection current having a current value correlated with a current value of the shunt current; and
a comparator (541, 552) that compares the current value of the detection current and a first detection current threshold, and outputs a comparison result as the detection signal, and
the resonance frequency controller (509, 512, 515)
controls the resonance frequency variable circuit (502, 511) to decrease the resonance frequency of the antenna (104, 112, 212, 501) when the detection signal indicates that the current value of the detection current is less than or equal to the first detection current threshold, and
controls the resonance frequency variable circuit (502, 511) to increase the resonance frequency of the antenna (104, 112, 212, 501) when the detection signal indicates that the current value of the detection current is greater than the first detection current threshold.

3. The contactless communication device according to claim 2, wherein
the first detection current threshold is a value greater than a difference between the rectified output current before change of the resonance frequency of the antenna (104, 112, 212, 501) and the rectified output current after the change.

4. The contactless communication device according to claim 1, wherein
the resonance frequency variable circuit (502, 511) is a circuit for changing the resonance frequency of the antenna (104, 112, 212, 501) to at least a first resonance frequency and a second resonance frequency,
the second resonance frequency is higher than the first resonance frequency, and
in a situation where the contactless communication device is a single device and receives power between the transceiver device and the antenna (104, 112, 212, 501), the rectified output current when the resonance frequency of the antenna (104, 112, 212, 501) is the first resonance frequency is larger than the rectified output current when the resonance frequency of the antenna (104, 112, 212, 501) is the second resonance frequency.

5. The contactless communication device according to claim 1, further comprising:
a power supply (506) that generates, from the rectified output current, a predetermined power supply voltage to be applied to the load circuit (115, 215), wherein
the resonance frequency variable circuit (502, 511) is a circuit for changing the resonance frequency of the antenna (104, 112, 212, 501) to at least a third resonance frequency and a fourth resonance frequency,
the power supply (506) includes a shunt power supply circuit that supplies a shunt current to a ground reference electric potential according to an input voltage of the power supply (506) and the predetermined power supply voltage,
the detector (507, 513) includes:
a current detection circuit that outputs a detection current having a current value correlated with a current value of the shunt current; and
a comparator (541, 552) that compares the current value of the detection current and a first detection current threshold or compares the current value of the detection current and a second detection current threshold smaller than the first detection current threshold, and outputs a comparison result as the detection signal, and
the resonance frequency controller (509, 512, 515)
controls the resonance frequency variable circuit (502, 511) to change the resonance frequency of the antenna (104, 112, 212, 501) to the fourth resonance frequency when the detection signal indicates that the current value of the detection current is greater than the first detection current threshold, and
controls the resonance frequency variable circuit (502, 511) to change the resonance frequency of the antenna (104, 112, 212, 501) to the third resonance frequency when the detection signal indicates that the current value of the detection current is less than or equal to the second detection current threshold.

6. The contactless communication device according to claim 5, wherein
the first detection current threshold is a value larger than a value obtained by subtracting a current value of the rectified output current when the resonance frequency of the antenna (104, 112, 212, 501) is the fourth resonance frequency from a current value of the rectified output current when the resonance frequency of the antenna (104, 112, 212, 501) is the third resonance frequency.

7. The contactless communication device according to any one of claims 1 to 6, further comprising:
a receiver (103, 503) that receives data in accordance with a signal obtained from the antenna (104, 112, 212, 501), wherein
the load circuit controls, according to the data, execution and stop of an operation of changing the resonance frequency of the antenna (104, 112, 212, 501), the operation being performed by the resonance frequency controller (509, 512, 515).

8. The contactless communication device according to any one of claims 1 to 7, further comprising:
a power supply (506) that generates, from the rectified output current, a predetermined power supply voltage to be applied to the load circuit (115, 215), wherein
the power supply (506) includes a shunt power supply circuit that supplies a shunt current to a ground reference electric potential according to an input voltage of the power supply (506) and the predetermined power supply voltage,
the detector (507, 513) includes:
a current detection circuit that outputs a detection current having a current value correlated with a current value of the shunt current; and
a comparator (541, 552) that compares the current value of the detection current and a first detection current threshold, and outputs a comparison result,
the load circuit (115, 215) has at least a first state and a second state,
the resonance frequency variable circuit (502, 511) is a circuit (502, 511) for changing the resonance frequency of the antenna (104, 112, 212, 501) to at least a fifth resonance frequency and a sixth resonance frequency, and
the first detection current threshold is greater than a value obtained by adding (i) a value obtained by subtracting a current value of the rectified output current when the resonance frequency of the antenna (104, 112, 212, 501) is the sixth resonance frequency from a current value of the rectified output current when the resonance frequency of the antenna (104, 112, 212, 501) is the fifth resonance frequency and (ii) a value obtained by subtracting a value of the load current in the first state from a value of the load current in the second state.

9. The contactless communication device according to any one of claims 1 to 8, further comprising:
a receiver (103, 503) that receives data in accordance with a signal obtained from the antenna (104, 112, 212, 501), wherein
the load circuit (115, 215) determines whether an ID indicated by the data matches an ID of the contactless communication device, and when non-matching is determined, the load circuit performs, regardless of the detection signal, an operation of changing the resonance frequency of the antenna (104, 112, 212, 501), the operation being performed by the resonance frequency controller (509, 512, 515).

10. A control method for controlling a contactless communication device, the contactless communication device including:
an antenna (104, 112, 212, 501) that receives power from a transceiver device through contactless communication;
a resonance frequency variable circuit (502, 511) that changes a resonance frequency of the antenna (104, 112, 212, 501);
a rectifier (114, 214, 505) that rectifies an antenna (104, 112, 212, 501) output current output by the antenna (104, 112, 212, 501); and
a load circuit (115, 215) that consumes a load current; wherein the control method is **characterized in that**
a detector (507, 513) of the contactless communication device detects an excess current that is a difference between a rectified output current output by the rectifier (114, 214, 505) and the load current, and
the control method comprising:
obtaining a detection signal output by the detector (507, 513) and indicating a detection result of the excess current; and
changing the resonance frequency of the antenna (104, 112, 212, 501) by controlling the resonance frequency variable circuit (502, 511) according to the detection signal.

11. A program causing a computer to execute the control method according to claim 10 in a device according to claim 1.

## Patentansprüche

1. Kontaktlose Kommunikationsvorrichtung, umfassend:
eine Antenne (104, 112, 212, 501), die Leistung von einer Sendeempfängervorrichtung über kontaktlose Kommunikation empfängt;
eine variable Resonanzfrequenzschaltung (502, 511), die eine Resonanzfrequenz der Antenne (104, 112, 212, 501) ändert;
einen Gleichrichter (114, 214, 505), der eine Antennenausgangsstrom, der von der Antenne (104, 112, 212, 501) ausgegeben wird, gleichrichtet; und
eine Lastschaltung (115, 215), die einen Laststrom verbraucht;
wobei die kontaktlose Kommunikationsvorrichtung **dadurch gekennzeichnet ist, dass** sie weiter umfasst
einen Detektor (507, 513), der einen überschüssigen Strom erfasst, der eine Differenz zwischen einer gleichgerichteten Ausgangsstromausgabe des Gleichrichters (114, 214, 505) und dem Laststrom ist; und
eine Resonanzfrequenzsteuereinheit (509, 512, 515), die die Resonanzfrequenz der Antenne (104, 112, 212, 501) ändert, indem sie die variable Resonanzfrequenzschaltung (502, 511) gemäß einem Erfassungssignal steuert, das von dem Detektor (507, 513) ausgegeben wird und ein Erfassungsergebnis des überschüssigen Stroms angibt.

2. Kontaktlose Kommunikationsvorrichtung nach Anspruch 1, weiter umfassend:
eine Leistungszufuhr (506), die aus dem gleichgerichteten Ausgangsstrom eine vorgegebene Leistungszufuhrspannung erzeugt, die an die Lastschaltung (115, 215) angelegt werden soll, wobei
die Leistungszufuhr (506) eine Nebenanschlussleistungszufuhrschaltung beinhaltet, die einen Nebenstrom an ein elektrisches Massereferenzpotenzial gemäß einer Eingangsspannung der Leistungszufuhr (506) und der vorgegebenen Leistungszufuhrspannung zuführt,
wobei der Detektor (507, 513) beinhaltet:
eine Stromerfassungsschaltung, die einen Erfassungsstrom ausgibt, der einen Stromwert aufweist, der mit einem Stromwert des Nebenstroms korreliert; und
einen Komparator (541, 552), der den Stromwert des Erfassungsstroms und einen ersten Erfassungsstromschwellenwert vergleicht und ein Vergleichsergebnis als das Erfassungssignal ausgibt, und
die Resonanzfrequenzsteuereinheit (509, 512, 515)
die variable Resonanzfrequenzschaltung (502, 511) so steuert, dass die Resonanzfrequenz der Antenne (104, 112, 212, 501) verringert wird, wenn das Erfassungssignal angibt, dass der Stromwert des Erfassungsstroms kleiner oder gleich dem ersten Erfassungsstromschwellenwert ist, und
die variable Resonanzfrequenzschaltung (502, 511) steuert, die Resonanzfrequenz der Antenne (104, 112, 212, 501) zu erhöhen, wenn das Erfassungssignal angibt, dass der Stromwert des Erfassungsstroms größer als der erste Erfassungsstromschwellenwert ist.

3. Kontaktlose Kommunikationsvorrichtung nach Anspruch 2, wobei
der erste Erfassungsstromschwellenwert ein größerer Wert als eine Differenz zwischen dem gleichgerichteten Ausgangsstrom vor einer Änderung der Resonanzfrequenz der Antenne (104, 112, 212, 501) und dem gleichgerichteten Ausgangsstrom nach der Änderung ist.

4. Kontaktlose Kommunikationsvorrichtung nach Anspruch 1, wobei
die variable Resonanzfrequenzschaltung (502, 511) eine Schaltung zum Ändern der Resonanzfrequenz der Antenne (104, 112, 212, 501) auf mindestens eine erste Resonanzfrequenz und eine zweite Resonanzfrequenz ist,
die zweite Resonanzfrequenz höher als die erste Resonanzfrequenz ist, und
in einer Situation, dass die kontaktlose Kommunikationsvorrichtung eine einzelne Vorrichtung ist und Leistung zwischen der Sendeempfängervorrichtung und der Antenne (104, 112, 212, 501) empfängt, der gleichgerichtete Ausgangsstrom, wenn die Resonanzfrequenz der Antenne (104, 112, 212, 501) die erste Resonanzfrequenz ist, größer als der gleichgerichtete Ausgangsstrom ist, wenn die Resonanzfrequenz der Antenne (104, 112, 212, 501) die zweite Resonanzfrequenz ist.

5. Kontaktlose Kommunikationsvorrichtung nach Anspruch 1, weiter umfassend:
eine Leistungszufuhr (506), die aus dem gleichgerichteten Ausgangsstrom eine vorgegebene Leistungszufuhrspannung erzeugt, die an die Lastschaltung (115, 215) angelegt werden soll, wobei
die variable Resonanzfrequenzschaltung (502, 511) eine Schaltung ist, um die Resonanzfrequenz der Antenne (104, 112, 212, 501) auf mindestens eine dritte Resonanzfrequenz und eine vierte Resonanzfrequenz zu ändern,
die Leistungszufuhr (506) eine Nebenanschlussleistungszufuhrschaltung beinhaltet, die einen Nebenstrom an ein elektrisches Massereferenzpotenzial gemäß einer Eingangsspannung der Leistungszufuhr (506) und der vorgegebenen Leistungszufuhrspannung zuführt,
wobei der Detektor (507, 513) beinhaltet:
eine Stromerfassungsschaltung, die einen Erfassungsstrom ausgibt, der einen mit einem Stromwert des Nebenstroms korrelierten Stromwert aufweist; und
einen Komparator (541, 552), der den Stromwert des Erfassungsstroms und einen ersten Erfassungsstromschwellenwert vergleicht oder den Stromwert des Erfassungsstroms und einen zweiten Erfassungsstromschwellenwert, der kleiner als der erste Erfassungsstromschwellenwert ist, vergleicht und ein Vergleichsergebnis als das Erfassungssignal ausgibt, und
die Resonanzfrequenzsteuereinheit (509, 512, 515)
die variable Resonanzfrequenzschaltung (502, 511) steuert, die Resonanzfrequenz der Antenne (104, 112, 212, 501) auf die vierte Resonanzfrequenz zu ändern, wenn das Erfassungssignal angibt, dass der Stromwert des Erfassungsstroms größer als der erste Erfassungsstromschwellenwert ist, und
die variable Resonanzfrequenzschaltung (502, 511) steuert, die Resonanzfrequenz der Antenne (104, 112, 212, 501) auf die dritte Resonanzfrequenz zu ändern, wenn das Erfassungssignal angibt, dass der Stromwert des Erfassungsstroms kleiner oder gleich dem zweiten Erfassungsstromschwellenwert ist.

6. Kontaktlose Kommunikationsvorrichtung nach Anspruch 5, wobei
der erste Erfassungsstromschwellenwert ein größerer Wert als ein Wert ist, der durch Subtrahieren eines Stromwerts des gleichgerichteten Ausgangsstroms, wenn die Resonanzfrequenz der Antenne (104, 112, 212, 501) die vierte Resonanzfrequenz ist, von einem Stromwert des gleichgerichteten Ausgangsstroms, wenn die Resonanzfrequenz der Antenne (104, 112, 212, 501) die dritte Resonanzfrequenz ist, erhalten wird.

7. Kontaktlose Kommunikationsvorrichtung nach einem der Ansprüche 1 bis 6, weiter umfassend:
einen Empfänger (103, 503), der Daten in Übereinstimmung mit einem Signal empfängt, das von der Antenne (104, 112, 212, 501) erhalten wird, wobei
die Lastschaltung, gemäß den Daten, eine Ausführung und ein Stoppen einer Operation zum Ändern der Resonanzfrequenz der Antenne (104, 112, 212, 501) steuert, wobei die Operation von der Resonanzfrequenzsteuereinheit (509, 512, 515) durchgeführt wird.

8. Kontaktlose Kommunikationsvorrichtung nach einem der Ansprüche 1 bis 7, weiter umfassend:
eine Leistungszufuhr (506), die aus dem gleichgerichteten Ausgangsstrom eine vorgegebene Leistungszufuhrspannung erzeugt, die an die Lastschaltung (115, 215) angelegt werden soll, wobei
die Leistungszufuhr (506) eine Nebenanschlussleistungszufuhrschaltung beinhaltet, die einen Nebenstrom einem elektrischen Massereferenzpotenzial gemäß einer Eingangsspannung der Leistungszufuhr (506) und der vorgegebenen Leistungszufuhrspannung zuführt,
wobei der Detektor (507, 513) beinhaltet:
eine Stromerfassungsschaltung, die einen Erfassungsstrom ausgibt, der einen mit einem Stromwert des Nebenstroms korrelierten Stromwert aufweist; und
einen Komparator (541, 552), der den Stromwert des Erfassungsstroms und einen ersten Erfassungsstromschwellenwert vergleicht und ein Vergleichsergebnis ausgibt,
wobei die Lastschaltung (115, 215) mindestens einen ersten Zustand und einen zweiten Zustand aufweist,
die variable Resonanzfrequenzschaltung (502, 511) eine Schaltung (502, 511) ist, um die Resonanzfrequenz der Antenne (104, 112, 212, 501) auf mindestens eine fünfte Resonanzfrequenz und eine sechste Resonanzfrequenz zu ändern, und
der erste Erfassungsstromschwellenwert größer als ein Wert ist, der durch Addieren (i) eines Werts, der durch Subtrahieren eines Stromwerts des gleichgerichteten Ausgangsstroms, wenn die Resonanzfrequenz der Antenne (104, 112, 212, 501) die sechste Resonanzfrequenz ist, von einem Stromwert des gleichgerichteten Ausgangsstroms, wenn die Resonanzfrequenz der Antenne (104, 112, 212, 501) die fünfte Resonanzfrequenz ist, erhalten wird, und (ii) eines Werts, der durch Subtrahieren eines Werts des Laststroms im ersten Zustand von einem Wert des Laststroms im zweiten Zustand erhalten wird, erhalten wird.

9. Kontaktlose Kommunikationsvorrichtung nach einem der Ansprüche 1 bis 8, weiter umfassend:
einen Empfänger (103, 503), der Daten in Übereinstimmung mit einem Signal empfängt, das von der Antenne (104, 112, 212, 501) erhalten wird, wobei
die Lastschaltung (115, 215) bestimmt, ob eine ID, die von den Daten angegeben wird, mit einer ID der kontaktlosen Kommunikationsvorrichtung übereinstimmt, und wenn keine Übereinstimmung bestimmt wird, die Lastschaltung ungeachtet des Erfassungssignals eine Operation zum Ändern der Resonanzfrequenz der Antenne (104, 112, 212, 501) durchführt, wobei die Operation von der Resonanzfrequenzsteuereinheit (509, 512, 515) durchgeführt wird.

10. Steuerungsverfahren zum Steuern einer kontaktlosen Kommunikationsvorrichtung, wobei die kontaktlose Kommunikationsvorrichtung beinhaltet:
eine Antenne (104, 112, 212, 501), die Leistung von einer Sendeempfängervorrichtung durch kontaktlose Kommunikation empfängt;
eine variable Resonanzfrequenzschaltung (502, 511), die eine Resonanzfrequenz der Antenne (104, 112, 212, 501) ändert;
einen Gleichrichter (114, 214, 505), der einen von der Antenne (104, 112, 212, 501) ausgegebenen Ausgangsstrom der Antenne (104, 112, 212, 501) gleichrichtet; und
eine Lastschaltung (115, 215), die einen Laststrom verbraucht; wobei das Steuerungsverfahren **dadurch gekennzeichnet ist, dass**
ein Detektor (507, 513) der kontaktlosen Kommunikationsvorrichtung einen überschüssigen Strom erfasst, der eine Differenz zwischen einer gleichgerichteten Ausgangsstromausgabe des Gleichrichters (114, 214, 505) und dem Laststrom ist, und
wobei das Steuerungsverfahren umfasst:
Erhalten einer Erfassungssignals, das von dem Detektors (507, 513) ausgegeben wird und ein Erfassungsergebnis des überschüssigen Stroms angibt; und
Ändern der Resonanzfrequenz der Antenne (104, 112, 212, 501) durch Steuern der variablen Resonanzfrequenzschaltung (502, 511) gemäß dem Erfassungssignal.

11. Programm, das einen Computer veranlasst, das Steuerungsverfahren nach Anspruch 10 in einer Vorrichtung nach Anspruch 1 auszuführen.

## Revendications

1. Dispositif de communication sans contact comprenant :
une antenne (104, 112, 212, 501) qui reçoit de l'énergie d'un dispositif émetteur-récepteur par communication sans contact ;
un circuit de variation de la fréquence de résonance (502, 511) qui modifie une fréquence de résonance de l'antenne (104, 112, 212, 501) ;
un redresseur (114, 214, 505) qui redresse un courant de sortie de l'antenne délivré par l'antenne (104, 112, 212, 501) ; et
un circuit de charge (115, 215) qui consomme un courant de charge ;
dans lequel le dispositif de communication sans contact est **caractérisé en ce qu'**il comprend en outre un détecteur (507, 513) qui détecte un courant excédentaire qui est une différence entre un courant de sortie redressé délivré par le redresseur (114, 214, 505) et le courant de charge ; et
un dispositif de commande de la fréquence de résonance (509, 512, 515) qui modifie la fréquence de résonance de l'antenne (104, 112, 212, 501) en commandant le circuit de variation de la fréquence de résonance (502, 511) selon un signal de détection délivré par le détecteur (507, 513) et indiquant un résultat de détection du courant excédentaire.

2. Dispositif de communication sans contact selon la revendication 1, comprenant en outre :
une alimentation électrique (506) qui génère, à partir du courant de sortie redressé, une tension d'alimentation électrique prédéterminée devant être appliquée au circuit de charge (115, 215), dans lequel
l'alimentation électrique (506) comprend un circuit d'alimentation électrique de shunt qui fournit un courant de shunt à un potentiel électrique de référence de masse selon une tension d'entrée de l'alimentation électrique (506) et la tension d'alimentation électrique prédéterminée,
le détecteur (507, 513) comprend :
un circuit de détection de courant qui délivre un courant de détection ayant une valeur de courant corrélée à une valeur de courant du courant de shunt ; et
un comparateur (541, 552) qui compare la valeur de courant du courant de détection et un premier seuil de courant de détection, et délivre un résultat de comparaison en tant que signal de détection, et
le dispositif de commande de la fréquence de résonance (509, 512, 515)
commande le circuit de variation de la fréquence de résonance (502, 511) pour diminuer la fréquence de résonance de l'antenne (104, 112, 212, 501) lorsque le signal de détection indique que la valeur de courant du courant de détection est inférieure ou égale au premier seuil de courant de détection, et
commande le circuit de variation de la fréquence de résonance (502, 511) pour augmenter la fréquence de résonance de l'antenne (104, 112, 212, 501) lorsque le signal de détection indique que la valeur de courant du courant de détection est supérieure au premier seuil de courant de détection.

3. Dispositif de communication sans contact selon la revendication 2, dans lequel
le premier seuil de courant de détection est une valeur supérieure à une différence entre le courant de sortie redressé avant modification de la fréquence de résonance de l'antenne (104, 112, 212, 501) et le courant de sortie redressé après la modification.

4. Dispositif de communication sans contact selon la revendication 1, dans lequel
le circuit de variation de la fréquence de résonance (502, 511) est un circuit pour modifier la fréquence de résonance de l'antenne (104, 112, 212, 501) à au moins une première fréquence de résonance et une deuxième fréquence de résonance,
la deuxième fréquence de résonance est supérieure à la première fréquence de résonance, et
dans une situation dans laquelle le dispositif de communication sans contact est un dispositif unique et reçoit de l'énergie entre le dispositif émetteur-récepteur et l'antenne (104, 112, 212, 501), le courant de sortie redressé lorsque la fréquence de résonance de l'antenne (104, 112, 212, 501) est la première fréquence de résonance est supérieur au courant de sortie redressé lorsque la fréquence de résonance de l'antenne (104, 112, 212, 501) est la deuxième fréquence de résonance.

5. Dispositif de communication sans contact selon la revendication 1, comprenant en outre :
une alimentation électrique (506) qui génère, à partir du courant de sortie redressé, une tension d'alimentation électrique prédéterminée devant être appliquée au circuit de charge (115, 215), dans lequel
le circuit de variation de la fréquence de résonance (502, 511) est un circuit pour modifier la fréquence de résonance de l'antenne (104, 112, 212, 501) à au moins une troisième fréquence de résonance et une quatrième fréquence de résonance,
l'alimentation électrique (506) comprend un circuit d'alimentation électrique de shunt qui fournit un courant de shunt à un potentiel électrique de référence de masse selon une tension d'entrée de l'alimentation électrique (506) et la tension d'alimentation électrique prédéterminée,
le détecteur (507, 513) comprend :
un circuit de détection de courant qui délivre un courant de détection ayant une valeur de courant corrélée à une valeur de courant du courant de shunt ; et
un comparateur (541, 552) qui compare la valeur de courant du courant de détection et un premier seuil de courant de détection ou compare la valeur de courant du courant de détection et un deuxième seuil de courant de détection inférieur au premier seuil de courant de détection, et délivre un résultat de comparaison en tant que signal de détection, et
le dispositif de commande de la fréquence de résonance (509, 512, 515)
commande le circuit de variation de la fréquence de résonance (502, 511) pour modifier la fréquence de résonance de l'antenne (104, 112, 212, 501) à la quatrième fréquence de résonance lorsque le signal de détection indique que la valeur de courant du courant de détection est supérieure au premier seuil de courant de détection, et
commande le circuit de variation de la fréquence de résonance (502, 511) pour modifier la fréquence de résonance de l'antenne (104, 112, 212, 501) à la troisième fréquence de résonance lorsque le signal de détection indique que la valeur de courant du courant de détection est inférieure ou égale au deuxième seuil de courant de détection.

6. Dispositif de communication sans contact selon la revendication 5, dans lequel
le premier seuil de courant de détection est une valeur supérieure à une valeur obtenue en soustrayant une valeur de courant du courant de sortie redressé lorsque la fréquence de résonance de l'antenne (104, 112, 212, 501) est la quatrième fréquence de résonance d'une valeur de courant du courant de sortie redressé lorsque la fréquence de résonance de l'antenne (104, 112, 212, 501) est la troisième fréquence de résonance.

7. Dispositif de communication sans contact selon l'une quelconque des revendications 1 à 6, comprenant en outre :
un récepteur (103, 503) qui reçoit des données conformément à un signal obtenu à partir de l'antenne (104, 112, 212, 501), dans lequel
le circuit de charge commande, selon les données, l'exécution et l'arrêt d'une opération de modification de la fréquence de résonance de l'antenne (104, 112, 212, 501), ladite opération étant effectuée par le dispositif de commande de la fréquence de résonance (509, 512, 515).

8. Dispositif de communication sans contact selon l'une quelconque des revendications 1 à 7, comprenant en outre :
une alimentation électrique (506) qui génère, à partir du courant de sortie redressé, une tension d'alimentation électrique prédéterminée devant être appliquée au circuit de charge (115, 215), dans lequel
l'alimentation électrique (506) comprend un circuit d'alimentation électrique de shunt qui fournit un courant de shunt à un potentiel électrique de référence de masse selon une tension d'entrée de l'alimentation électrique (506) et la tension d'alimentation électrique prédéterminée,
le détecteur (507, 513) comprend :
un circuit de détection de courant qui délivre un courant de détection ayant une valeur de courant corrélée à une valeur de courant du courant de shunt ; et
un comparateur (541, 552) qui compare la valeur de courant du courant de détection et un premier seuil de courant de détection, et délivre un résultat de comparaison,
le circuit de charge (115, 215) présente au moins un premier état et un deuxième état,
le circuit de variation de la fréquence de résonance (502, 511) est un circuit (502, 511) pour modifier la fréquence de résonance de l'antenne (104, 112, 212, 501) à au moins une cinquième fréquence de résonance et une sixième fréquence de résonance, et
le premier seuil de courant de détection est supérieur à une valeur obtenue en additionnant (i) une valeur obtenue en soustrayant une valeur de courant du courant de sortie redressé lorsque la fréquence de résonance de l'antenne (104, 112, 212, 501) est la sixième fréquence de résonance d'une valeur de courant du courant de sortie redressé lorsque la fréquence de résonance de l'antenne (104, 112, 212, 501) est la cinquième fréquence de résonance et (ii) une valeur obtenue en soustrayant une valeur du courant de charge dans le premier état d'une valeur du courant de charge dans le deuxième état.

9. Dispositif de communication sans contact selon l'une quelconque des revendications 1 à 8, comprenant en outre :
un récepteur (103, 503) qui reçoit des données conformément à un signal obtenu à partir de l'antenne (104, 112, 212, 501), dans lequel
le circuit de charge (115, 215) détermine si un identifiant indiqué par les données correspond à un identifiant du dispositif de communication sans contact, et lorsque la non-correspondance est déterminée, le circuit de charge effectue, indépendamment du signal de détection, une opération de modification de la fréquence de résonance de l'antenne (104, 112, 212, 501), ladite opération étant effectuée par le dispositif de commande de la fréquence de résonance (509, 512, 515).

10. Procédé de commande pour commander un dispositif de communication sans contact, ledit dispositif de communication sans contact comprenant :
une antenne (104, 112, 212, 501) qui reçoit de l'énergie d'un dispositif émetteur-récepteur par communication sans contact ;
un circuit de variation de la fréquence de résonance (502, 511) qui modifie une fréquence de résonance de l'antenne (104, 112, 212, 501) ;
un redresseur (114, 214, 505) qui redresse un courant de sortie de l'antenne (104, 112, 212, 501) délivré par l'antenne (104, 112, 212, 501) ; et
un circuit de charge (115, 215) qui consomme un courant de charge ;
dans lequel le procédé de commande est **caractérisé en ce que**
un détecteur (507, 513) du dispositif de communication sans contact détecte un courant excédentaire qui est une différence entre un courant de sortie redressé délivré par le redresseur (114, 214, 505) et le courant de charge, et
le procédé de commande comprend :
l'obtention d'un signal de détection délivré par le détecteur (507, 513) et indiquant un résultat de détection du courant excédentaire ; et
la modification de la fréquence de résonance de l'antenne (104, 112, 212, 501) en commandant le circuit de variation de la fréquence de résonance (502, 511) selon le signal de détection.

11. Programme amenant un ordinateur à exécuter le procédé de commande selon la revendication 10 dans un dispositif selon la revendication 1.
